(19) Europäisches Patentamt
European Patent Office
Office européen des brevets

(11) EP 2 935 286 B1

(12) **FASCICULE DE BREVET EUROPEEN**

(45) Date de publication et mention de la délivrance du brevet:
**01.08.2018 Bulletin 2018/31**

(21) Numéro de dépôt: **13815735.9**

(22) Date de dépôt: **20.12.2013**

(51) Int Cl.:
***C07F 7/08*** (2006.01) ***B01J 29/03*** (2006.01)
***B01J 29/04*** (2006.01) ***B01J 37/03*** (2006.01)
***B01J 21/08*** (2006.01) ***B01J 23/42*** (2006.01)
***B01J 35/00*** (2006.01) ***B01J 37/02*** (2006.01)

(86) Numéro de dépôt international:
**PCT/EP2013/077581**

(87) Numéro de publication internationale:
**WO 2014/096306 (26.06.2014 Gazette 2014/26)**

(54) **PROCÉDÉ D'HYDROSILYLATION**

HYDROSILYLIERUNGSVERFAHREN

HYDROSILYLATION METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.12.2012 FR 1262643**

(43) Date de publication de la demande:
**28.10.2015 Bulletin 2015/44**

(73) Titulaires:
- **ELKEM SILICONES France SAS 69003 Lyon (FR)**
- **Université Claude Bernard Lyon 1 69100 Villeurbanne (FR)**

(72) Inventeurs:
- **THIEULEUX, Chloé 69100 Villeurbanne (FR)**
- **SAYAH EL RAYES, Reine 69100 Villeurbanne (FR)**
- **ZANOTA, Marie-Line 69100 Villeurbanne (FR)**
- **MEILLE, Valérie 69005 Lyon (FR)**
- **VIVIER, Richard 63100 Clermont Ferrand (FR)**
- **MARROT, Sébastien 69008 Lyon (FR)**

(74) Mandataire: **Lavoix**
**62, rue de Bonnel**
**69448 Lyon Cedex 03 (FR)**

(56) Documents cités:
**WO-A1-2010/040926 US-A1- 2009 286 899**
**US-B2- 7 038 001**

- **M. BOUALLEG ET AL: "Selective and regular localization of accessible Pt nanoparticles inside the walls of an ordered silica: Application as a highly active and well-defined heterogeneous catalyst for propene and styrene hydrogenation reactions", JOURNAL OF CATALYSIS, vol. 284, no. 2, 1 décembre 2011 (2011-12-01), pages 184-193, XP055076804, ISSN: 0021-9517, DOI: 10.1016/j.jcat.2011.09.003 cité dans la demande**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

La présente invention a trait à un nouveau procédé d'hydrosilylation mettant en oeuvre un catalyseur hétérogène et à un dispositif permettant la mise en oeuvre dudit procédé.

Les réactions d'hydrosilylation d'au moins un composé (C) comprenant au moins une insaturation en présence d'un composé organosilicié (O) comprenant au moins un atome d'hydrogène lié directement à un atome de silicium (soit au moins un groupe Si-H ou fonction hydrogénosiloxane) sont largement répandues dans l'industrie des silicones pour accéder à des silanes et polysiloxanes fonctionnalisés et également pour la préparation de réseaux silicones obtenus par réticulation entre des huiles polyméthylhydrogénosiloxanes et polyméthylvinylsiloxanes. Ces réactions sont généralement catalysées par des complexes organométalliques à base de platine selon un mécanisme de catalyse homogène. Parmi les catalyseurs d'hydrosilylation homogènes bien connus il est possible de citer le platine de Karstedt de formule $Pt_2(DVTMS)_3$, dans laquelle DVTMS représente le divinyltétraméthyldisiloxane. Cependant, ce type de catalyseur présente différents inconvénients. D'une part il est relativement instable et évolue au cours de la réaction en formant des espèces colloïdales de Pt(0), dont la taille n'est pas contrôlée, qui conduisent à une coloration du milieu réactionnel et des huiles obtenues allant du jaune au noir. D'autre part, les étapes d'élimination du platine sont coûteuses et le catalyseur ne peut pas être recyclé. Il existe donc un intérêt d'accéder à des catalyseurs hétérogènes performants, facilement recyclables, dont la préparation, la mise en oeuvre et l'activité sont reproductibles, permettant d'opérer en continu pour les réactions d'hydrosilylation.

Des catalyseurs hétérogènes, notamment à base de platine, pour la réaction d'hydrosilylation sont connus par exemple de US7038001.

Cependant, une quantité non négligeable du platine, contenu dans ces catalyseurs hétérogènes, peut être relarguée et solubilisée dans le milieu réactionnel, on parle alors de platine en phase homogène. Ce phénomène présente différents inconvénients :

- la solubilisation d'une partie du platine du catalyseur induit une variabilité de l'activité du catalyseur et donc des problèmes de reproductibilité des réactions d'hydrosilylation ;
- dans le cas d'une hydrosilylation partielle, c'est-à-dire lorsque le milieu réactionnel en fin de réaction comprend toujours des composés comprenant au moins un atome d'hydrogène lié directement à au moins un atome de silicium, le platine qui a été solubilisé dans le milieu réactionnel peut catalyser des réactions secondaires lorsque ledit milieu réactionnel est laissé à l'air. Ce peut être notamment une réaction de déshydrogénocondensation entre les motifs SiH et l'eau issue de l'air, cette réaction est à l'origine d'une gélification de la surface du milieu réactionnel et d'un dégagement de dihydrogène avec les risques notamment d'explosion qui en découlent. Le relargage du platine dans le milieu réactionnel génère donc des problèmes de stabilité au stockage et de sécurité des milieux comprenant des groupes Si-H.

Il est connu de l'art antérieur, pour limiter le relargage des nanoparticules métalliques en phase homogène dans le milieu réactionnel, de faire subir au catalyseur, avant utilisation, une étape de traitement thermique sous atmosphère contrôlée Cependant, cette étape de traitement thermique a généralement pour effet de diminuer l'activité catalytique du catalyseur.

Il existe donc un intérêt à fournir un procédé d'hydrosilylation de composés comprenant au moins une insaturation et de composés organosiloxane mettant en oeuvre un système catalytique dans lequel les nanoparticules métalliques sont, tout en restant accessibles aux réactifs, suffisamment supportées pour ne pas être relarguées en phase homogène dans le milieu réactionnel.

L'objectif de la présente invention est par conséquent de fournir un procédé d'hydrosilylation mettant en oeuvre un système catalytique hétérogène stable, présentant une lixiviation faible voire nulle et étant reproductible.

L'invention a également pour objectif de fournir un procédé d'hydrosilylation pouvant être mis en oeuvre en continu.

Un autre objectif de l'invention est de fournir un procédé d'hydrosilylation permettant une versatilité importante des produits obtenus, permettant notamment de réaliser des hydrosilylations partielles.

Un autre objectif de l'invention est également de fournir un procédé d'hydrosilylation nécessitant des quantités limitées de nanoparticules métalliques.

L'invention a également pour objectif de fournir un dispositif permettant de mettre en oeuvre ce procédé, notamment un dispositif permettant la mise en oeuvre du procédé de l'invention en continu.

D'autres objectifs encore apparaîtront à la lumière de la description de l'invention qui suit.

La présente invention concerne un procédé d'hydrosilylation (P) d'au moins un composé (C) comprenant au moins une insaturation en présence d'un composé organosilicié (O) comprenant au moins un atome d'hydrogène lié directement à un atome de silicium (soit au moins un groupe Si-H également appelé fonction hydrogénosiloxane) et d'un système catalytique d'hydrosilylation comprenant un matériau poreux structuré (A) comportant des pores et une

charpente inorganique composée de murs d'oxyde de silicium dans lesquels sont contenues des nanoparticules métalliques.

Dans la suite de l'exposé, les expressions « matériau structuré (A) » ou « matériau (A) » sont utilisées de façon équivalente pour désigner le matériau poreux structuré (A) comportant des pores et une charpente inorganique composée de murs d'oxyde de silicium dans lesquels sont contenues des nanoparticules métalliques.

Dans le composé comprenant une insaturation, l'insaturation peut consister en une double liaison éthylénique ou en une triple liaison acétylénique.

Le composé (C) selon l'invention est un composé chimique comprenant au moins une insaturation ne faisant de préférence pas partie d'un cycle aromatique. Le composé (C) comprend notamment au moins une fonction alcène et/ou une fonction alcyne. Tout composé comprenant au moins une fonction alcène et/ou une fonction alcyne peut être utilisé dans le procédé selon l'invention, dans la mesure où il ne contient pas de fonction chimique réactive pouvant gêner, voire empêcher la réaction d'hydrosilylation.

Selon un mode de réalisation, le composé (C) comprend une ou plusieurs fonctions alcène et de 2 à 40 atomes de carbone. Il peut comprendre en outre 1 à 20 hétéroatomes choisis parmi N, P, O, S, F, Cl, Br et I. Lorsque le composé (C) comprend plusieurs fonctions alcènes, celles-ci peuvent être conjuguées ou non.

Selon un autre mode de réalisation, le composé (C) comprend une ou plusieurs fonctions alcynes et de 2 à 40 atomes de carbone. Il peut comprendre en outre 1 à 20 hétéroatomes choisis parmi N, P, O, S, F, Cl, Br et I. Lorsque le composé (C) comprend plusieurs fonctions alcynes, celles-ci peuvent être conjuguées ou pas.

Le composé (C) peut être choisi parmi les composés de formule (I) ou (II) :

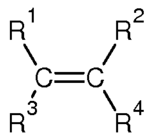

(I)

$R^1$-C≡C-$R^2$ (II) dans lesquelles :

- $R^1$, $R^2$, $R^3$ et $R^4$ représentent, indépendamment les uns des autres,

  ◦ un atome d'hydrogène ;
  ◦ un atome d'halogène choisi parmi le fluor, le chlore, le brome et l'iode ;
  ◦ un groupe alkyle ;
  ◦ un groupe cycloalkyle ;
  ◦ un groupe aryle ;
  ◦ un groupe hétéroaryle ;
  ◦ un groupe hétérocycloalkyle ;
  ◦ un groupe alcoxy ;
  ◦ un groupe aryloxy ;
  ◦ un groupe cycloalcoxy ;
  ◦ un groupe alkylsilyl ;
  ◦ un groupe alcoxysilyl ;
  ◦ un groupe acides carboxyliques ;
  ◦ un groupe esters alkylique ;
  ◦ un groupe urée ;
  ◦ un groupe amide ;
  ◦ un groupe sulfonamide ;
  ◦ un groupe imide ;
  ◦ un groupe cyano ;
  ◦ un groupe aldéhyde ;
  ◦ un groupe alcool ;
  ◦ un groupe thiol ;
  ◦ un groupe aminé ;
  ◦ un groupe imine ;
  ◦ un groupe sulfure ;
  ◦ un groupe sulfoxyde ;
  ◦ un groupe sulfone ;
  ◦ un groupe azide ;

◦ un groupe allyl phosphonate ; ou
◦ un groupe allyl phosphate ;

ces groupes pouvant être eux-mêmes substitués sur leur(s) partie(s) alkyle(s) et/ou cycloalkyle(s) et/ou aryle(s) par :

- un ou plusieurs groupes alkyles en $C_1$ à $C_8$, éventuellement halogénés ;
- un ou plusieurs groupes alcoxy en $C_1$ à $C_8$, éventuellement halogénés ;
- un ou plusieurs groupes aryle, éventuellement halogéné ;
- un ou plusieurs atomes d'halogène ;
- un ou plusieurs groupes acides carboxyliques ;
- un ou plusieurs groupes esters ;
- un ou plusieurs groupes éthers ;
- un ou plusieurs groupes urées ;
- un ou plusieurs groupes amides ;
- un ou plusieurs groupes sulfonamides ;
- un ou plusieurs groupes imides ;
- un ou plusieurs groupes cyano ;
- un ou plusieurs groupes aldéhydes ;
- une ou plusieurs fonctions cétones ;
- un ou plusieurs groupes alcools ;
- un ou plusieurs groupes thiols ;
- un ou plusieurs groupes aminés ;
- un ou plusieurs groupes imines ;
- un ou plusieurs groupes sulfures ;
- un ou plusieurs groupes sulfoxydes ;
- un ou plusieurs groupes sulfones ;
- un ou plusieurs groupes azides ;
- un ou plusieurs groupes phosphates ; et/ou
- un ou plusieurs groupes phosphonates ;

ou
au moins deux groupes choisis parmi $R^1$, $R^2$, $R^3$ et $R^4$ forment ensemble avec les atomes de carbone auxquels ils sont liés un ou plusieurs groupes cycloalkyles, hétérocycloalkyles, aryles ou hétéroaryles, ces groupes, cycloalkyles, hétérocycloalkyles, aryles et hétéroaryles pouvant être substitués par un ou plusieurs groupes alkyles en $C_1$ à $C_8$, éventuellement halogénés ; par un ou plusieurs groupes alcoxy en $C_1$ à $C_8$, éventuellement halogénés ; par un ou plusieurs groupes aryle, éventuellement halogéné ; par un ou plusieurs atomes d'halogène ; par un ou plusieurs groupes acides carboxyliques ; par un ou plusieurs groupes esters ; par un ou plusieurs groupes éthers, par un ou plusieurs groupes urées ; par un ou plusieurs groupes amides ; par un ou plusieurs groupes sulfonamides ; par un ou plusieurs groupes imides ; par un ou plusieurs groupes cyano ; par un ou plusieurs groupes aldéhydes ; par une ou plusieurs fonctions cétones ; par un ou plusieurs groupes alcools ; par un ou plusieurs groupes thiols ; par un ou plusieurs groupes aminés ; par un ou plusieurs groupes imines ; par un ou plusieurs groupes sulfures ; par un ou plusieurs groupes sulfoxydes ; par un ou plusieurs groupes sulfones ; par un ou plusieurs groupes azides ; par un ou plusieurs groupes phosphates ; et/ou par un ou plusieurs groupes phosphonates ;
les groupes restants parmi $R^1$, $R^2$, $R^3$ et $R^4$ étant tels que définis précédemment,
et leurs mélanges.

De préférence, $R^1$, $R^2$, $R^3$ et $R^4$ représentent, indépendamment les uns des autres :

- un atome d'hydrogène ;
- un groupe alkyle en $C_1$ à $C_{16}$, éventuellement substitué par un groupe hydroxy ou un atome d'halogène ;
- un phényle, éventuellement substitué par un groupe alkyle en $C_1$ à $C_4$, par un halogène, par un groupe alkyle en $C_1$ à $C_4$ lui-même substitué par un ou plusieurs halogènes, par un groupe alcoxy en $C_1$ à $C_4$ ou par une fonction amine éventuellement substituée une ou deux fois par un groupe alkyle en $C_1$ à $C_4$ ;
- une pyridine ;
- un ester alkylique en $C_1$ à $C_8$ ;
- une fonction cyano ;
- une fonction acide carboxylique ;
- un groupe acyloxy en $C_1$ à $C_4$, notamment acétyloxy ;

- un groupe amide primaire, notamment non substitué sur l'azote ou substitué une ou deux fois par un groupe alkyle en $C_1$ à $C_4$ ;
- un groupe alkyle polyéthoxylé, éventuellement substitué par un hydroxy ou une cétone.

Avantageusement, $R^1$ peut être un atome d'hydrogène, et $R^3$ peut représenter un substituant différent d'un atome d'hydrogène. Dans le cas d'un composé de formule (I), $R^2$ et $R^4$ peuvent en outre être des atomes d'hydrogène.
De préférence, le composé (C) peut également être choisi dans le groupe constitué par :

- les acrylates et les méthacrylates d'alkyles en $C_1$ à $C_4$ ;
- l'acide acrylique ou l'acide méthacrylique ;
- l'acétylène ;
- les alcènes, de préférence l'octène et plus préférentiellement le 1-octène ;
- les diènes non conjugués et de préférence l'hexadiène ou l'octadiène ;
- l'alcool allylique ;
- l'allylamine ;
- l'éther d'allyle et glycidyle ;
- l'éther d'allyle et de pipéridine et de préférence l'éther d'allyle et de pipéridine stériquement encombrée ;
- le styrène et de préférence l'alpha-méthyl-styrène ;
- le 1,2-époxy-4-vinylcyclohexane ;
- les alcènes chlorés et de préférence le chlorure d'allyle ;
- les alcènes fluorés et de préférence le 4,4,5,5,6,6,7,7,7-nonafluoro-1-heptene, et leurs mélanges.

Le composé (C) peut également être choisi parmi les composés comprenant plusieurs fonctions alcènes, de préférence deux ou trois fonctions alcènes, et de façon particulièrement préférée choisi parmi les composés suivants :

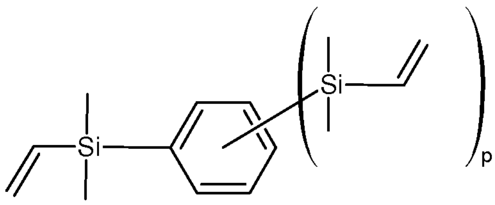
,

avec p valant 1 ou 2,

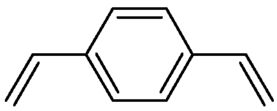
,

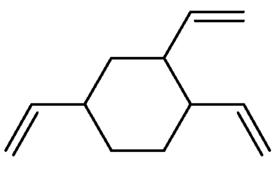
,

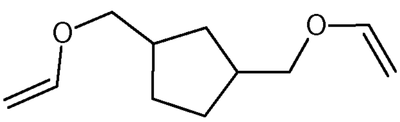
,

et leurs mélanges.
Il est également possible dans le cadre de l'invention d'avoir un mélange de composés (C) précités comprenant une fonction alcène et de composés (C) précités comprenant plusieurs fonctions alcènes.
Le composé (C) peut donc comprendre également des fonctions chimiques qui permettront de modifier chimiquement le composé obtenu à la suite de la réaction d'hydrosilylation.

L'hydrosilylation de composés comprenant à la fois une ou plusieurs doubles liaisons éthyléniques et une ou plusieurs triples liaisons acétyléniques est également envisagée dans le cadre de l'invention.

Dans le cadre de la présente invention, le composé organosilicié (O) comprend au moins un atome d'hydrogène directement lié à un atome de silicium (soit au moins un groupe Si-H).

De préférence, les atomes de silicium des composés (O) sont liés au plus à un atome d'hydrogène.

Le composé (O) peut être un composé silane ou un composé siloxane, notamment un hydrogénosilane ou un polyorganosiloxane.

Par composé « hydrogénosilane », on entend dans la présente invention les composés chimiques appartenant au groupe des silanes, comprenant donc au moins un atome de silicium, et comprenant au moins un atome d'hydrogène lié à l'atome de silicium. De préférence, le composé hydrogénosilane selon l'invention comprend moins de 5 atomes de silicium.

Tout composé hydrogénosilane peut être utilisé dans le procédé selon l'invention, dans la mesure où il ne contient pas de fonction chimique réactive pouvant gêner, voire empêcher la réaction d'hydrosilylation.

Selon un mode de réalisation de la présente invention, le composé hydrogénosilane peut être choisi parmi les composés de formule (III) :

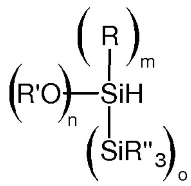

(III)

dans laquelle :

- R représente, indépendamment les uns des autres, un atome d'hydrogène ; un atome d'halogène, de préférence le chlore ; un groupe alkyle éventuellement substitué par un ou plusieurs groupes aryles ou cycloalkyles, par un ou plusieurs atomes d'halogène et/ou par une ou plusieurs fonctions cétone ; un groupe cycloalkyle éventuellement substitué par un ou plusieurs groupes alkyles et/ou par un ou plusieurs atomes d'halogène ; ou un groupe aryle éventuellement substitué par un ou plusieurs groupes alkyles et/ou par un ou plusieurs atomes d'halogène ;
- R' représente, indépendamment les uns des autres, un groupe alkyle éventuellement substitué par un ou plusieurs groupes aryles ou cycloalkyles, par un ou plusieurs atomes d'halogène et/ou par une fonction cétone ; un groupe cycloalkyle éventuellement substitué par un ou plusieurs groupes alkyles et/ou par un ou plusieurs atomes d'halogène ; ou un groupe aryle éventuellement substitué par un ou plusieurs groupes alkyles et/ou par un ou plusieurs atomes d'halogène ;
- R" représente, indépendamment les uns des autres, un atome d'hydrogène ; un atome d'halogène, de préférence le chlore ; un groupe alkyle éventuellement substitué par un ou plusieurs groupes aryles ou cycloalkyles et/ou par un ou plusieurs atomes d'halogène ; un groupe cycloalkyle éventuellement substitué par un ou plusieurs groupes alkyles et/ou par un ou plusieurs atomes d'halogène ; ou un groupe aryle éventuellement substitué par un ou plusieurs groupes alkyles et/ou par un ou plusieurs atomes d'halogène ; et
- m, n et o sont des nombres entiers valant 0, 1, 2 ou 3, et m+n+o = 3,

R, R' et R" étant identiques ou différents,
et leurs mélanges.

Le composé hydrogénosilane peut être choisi parmi les composés de formule (III) dans laquelle les symboles m = 0, n = 0 et o = 3, et R" représente un atome d'hydrogène, un atome d'halogène, de préférence le chlore, un groupe alkyle linéaire ou ramifié en $C_1$ à $C_8$ ou un groupe aryle.

Le composé hydrogénosilane peut en particulier être le tris(triméthylsilyl)silane.

Alternativement, le composé hydrogénosilane peut être choisi parmi les composés de formule (III) dans laquelle les symboles m=3, n = 0 et o = 0, et R représente un atome d'hydrogène, un atome d'halogène, de préférence le chlore, un groupe alkyle linéaire ou ramifié en $C_1$ à $C_8$ ou un groupe aryle.

Le composé organosilicié (O) peut également être un polyorganosiloxane comprenant :

(i) au moins un motif siloxyle de formule (IV)

$$H_d Z^3{}_e SiO_{\frac{4-(d+e)}{2}} \quad (IV)$$

dans laquelle :

- d=1 ou 2, de préférence d=1,
- e=0, 1 ou 2
- d+e=1, 2 ou 3,
- le(s) symbole(s) $Z^3$, identiques ou différents, représentent un groupe hydrocarboné monovalent ayant notamment de 1 à 30 atomes de carbone éventuellement substitué par des hétéroatomes ou des radicaux comprenant des hétéroatomes et de préférence choisi parmi le groupe constitué par des groupes alkyles ayant de 1 à 8 atomes de carbone inclus et les groupes aryles, et encore plus préférentiellement choisi parmi le groupe constitué par un radical méthyle, éthyle, propyle, 3,3,3-trifluoropropyle, xylyle, tolyle et phényle, de préférence méthyle ou phényle, par exemple méthyle ; et

(ii) éventuellement au moins un motif siloxyle de formule (V)

$$Z^2{}_c SiO_{\frac{4-c}{2}} \quad (V)$$

dans laquelle :

- c= 0, 1, 2 ou 3, de préférence 1, 2 ou 3 ;
- le(s) symbole(s) $Z^2$, identiques ou différents, représentent un groupe hydrocarboné monovalent ayant notamment de 1 à 30 atomes de carbone éventuellement substitué par des hétéroatomes ou des radicaux comprenant des hétéroatomes et de préférence choisi parmi le groupe constitué par des groupes alkyles ayant de 1 à 8 atomes de carbone inclus et les groupes aryles, et encore plus préférentiellement choisi parmi le groupe constitué par un radical méthyle, éthyle, propyle, 3,3,3-trifluoropropyle, xylyle, tolyle et phényle, de préférence méthyle ou phényle, par exemple méthyle.

Le polyorganosiloxane peut présenter une structure linéaire, ramifiée, cycliques ou en réseau.

Ces polyorganosiloxanes linéaires peuvent être des huiles ayant une viscosité dynamique à 25°C comprise entre 1 mPa.s et 100 000 mPa.s, préférentiellement entre 10 mPa.s et 5000 mPa.s, ou des gommes ayant une viscosité dynamique à 25°C supérieure à 100 000 mPa.s.

Toutes les viscosités dont il est question dans le présent exposé correspondent à une grandeur de viscosité dynamique à 25°C dite "Newtonienne", c'est-à-dire la viscosité dynamique qui est mesurée, de manière connue en soi, à un gradient de vitesse de cisaillement suffisamment faible pour que la viscosité mesurée soit indépendante du gradient de vitesse.

Des exemples de polyorganosiloxanes pouvant être des composés (O) sont :

- les diméthylpolysiloxanes à extrémités hydrogénodiméthylsilyles ;
- les diméthyl,hydrogénométhylpolysiloxanes à extrémités triméthylsilyles ;
- les diméthyl,hydrogénométhylpolysiloxanes à extrémités hydrogénodiméthylsilyles ;
- les hydrogénométhylpolysiloxanes à extrémités triméthylsilyles ; ou
- les hydrogénométhylpolysiloxanes cycliques ;

et leurs mélanges.

Par « alkyle », on entend une chaîne hydrocarbonée, linéaire ou ramifiée, comprenant de 1 à 40 atomes de carbone, de préférence de 1 à 20 atomes de carbone, plus préférentiellement de 1 à 10 atomes de carbone. Un groupe alkyle peut être choisi dans le groupe constitué par méthyle, éthyle, isopropyle, n-propyle, tert-butyle, isobutyle, n-butyle, n-pentyle, isoamyle et 1,1-diméthylpropyle.

Par « cycloalkyle », on entend selon l'invention un groupe hydrocarboné saturé monocyclique ou polycyclique, de préférence monocyclique ou bicyclique, contenant de 3 à 20 atomes de carbone, de préférence de 5 à 8 atomes de carbone. Lorsque le groupe cycloalkyle est polycyclique, les multiples noyaux cycliques peuvent être rattachés les uns

aux autres par une liaison covalente et/ou par un atome spinanique et/ou être condensés les uns aux autres. Un groupe cycloalkyle peut être choisi dans le groupe constitué par le cyclopropyle, le cyclobutyle, le cyclopentyle, le cyclohexyle, le cycloheptyle, le cyclooctyle, l'adamantane et le norborane.

Par « aryle », on entend selon l'invention un groupe hydrocarboné aromatique contenant de 5 à 18 atomes de carbone, monocyclique ou polycyclique. Un groupe aryle peut être choisi dans le groupe constitué par phényle, naphtyle, anthracényle et phénanthryle.

Par « atome d'halogène », on entend selon l'invention un atome choisi dans le groupe constitué par le fluor, le chlore, le brome et l'iode.

Par « hétéroaryle », on entend selon l'invention un groupe aryle dans lequel au moins un atome de carbone a été substitué par un hétéroatome choisi parmi O, N, S et P. Un groupe hétéroaryle peut être choisi dans le groupe constitué par pyranyle, furanyle, pyridinyle, pyrimidinyle, pyrrolyle, pyrazolyle, imidazolyle, isothiazolyle, isoxazolyle et indolyle.

Par « hétérocycloalkyle », on entend selon l'invention un groupe cycloalkyle dans lequel au moins un atome de carbone a été substitué par un hétéroatome choisi parmi O, N, S et P. De préférence l'hétérocycloalkyle comprend de 5 à 10 membres. Un groupe hétérocycloalkyle peut en particulier être le groupe monocyclique oxiranyl ou le groupe bicyclique époxycyclohexyl.

Par « alcoxy », on entend selon l'invention un groupe alkyle tel que défini ci-avant lié à un atome d'oxygène. Un groupe alcoxy peut être choisi dans le groupe constitué par méthoxy, éthoxy, propoxy et butoxy.

Par « aryloxy », on entend selon l'invention un groupe aryle tel que défini ci-avant lié à un atome d'oxygène. Un groupe aryloxy peut être par exemple le groupe phénoxy.

Par « cycloalcoxy », on entend selon l'invention un groupe cycloalkyle tel que défini ci-avant lié à un atome d'oxygène.

Par « alkylsilyl », on entend selon l'invention un groupe alkyle tel que défini ci-avant lié à un atome de silicium.

Par « alcoxysilyl », on entend selon l'invention un groupe alcoxy tel que défini ci-avant lié à un atome de silicium.

Le catalyseur de l'invention comprend un matériau poreux structuré (A) comportant une charpente inorganique structurée composée de murs d'oxyde de silicium dans lesquels des nanoparticules métalliques sont incorporées.

Dans le cadre de la présente invention, on entend par « matériau structuré » un matériau qui présente une structure organisée notamment caractérisée par la présence d'au moins un pic de diffraction dans un diffractogramme sur poudre des rayons X aux petits angles (Small Angle X-Rays Scattering (Glatter et Kratky, Academic Press London 1982)). Le pic de diffraction observé dans le diffractogramme sur poudre des rayons X aux petits angles obtenu pour un matériau structuré est associé à une distance de répétition caractéristique du matériau considéré. Cette distance de répétition ou « période spatiale de répétition du système structuré » correspond à la périodicité des pores au sein du matériau, dans le cas des matériaux poreux. Dans le matériau (A) de l'invention la charpente est donc structurée c'est pourquoi on parle de murs et de pores (figure 1).

La structuration du matériau (A) final, déterminée par diffraction des rayons X aux petits angles ou par microscopie, peut être de type vermiculaire, lamellaire, hexagonal (une dimension ou deux dimensions) ou cubique. De façon préférée, la structuration du matériau final est hexagonal, de préférence hexagonal deux dimensions.

L'épaisseur (ou largeur) des murs (figure 1) du matériau (A), notamment déterminée par diffraction des rayons X aux petits angles et les mesures d'adsorption/désorption d'azote, est notamment supérieure à 3 nm, de préférence de 5 à 15 nm. L'épaisseur des murs correspond à la distance entre deux pores (ep dans la figure 1).

La taille des nanoparticules métalliques est de préférence inférieure ou égale à la largeur des murs constituant la charpente inorganique du matériau (A). De cette façon, les nanoparticules peuvent être totalement intégrées à l'intérieur des murs évitant ainsi leur relargage dans le milieu réactionnel. De préférence, les nanoparticules métalliques présentes au sein du matériau (A) ont une taille nanométrique c'est-à-dire qu'elles présentent un diamètre moyen de 1 à 10 nm, le diamètre moyen étant déterminé par exemple par microscopie électronique à transmission sous forme d'un histogramme de tailles ou, de préférence, par la technique de diffraction des Rayons X aux grands angles (WAXS « Wide Angle X Ray Scattering »).

Dans le cadre de la présente invention on entend par nanoparticules métalliques des nanoparticules de métal à l'état d'oxydation zéro, également noté M(0) ou métal (0) (M représentant le métal).

De préférence, dans le cadre de l'invention, le métal, qui est l'espèce catalytique active, est choisi parmi le platine, le rhodium, le ruthénium, l'iridium, le fer, le cuivre et le palladium, un mélange de deux ou plus de ces métaux est également envisageable. De préférence, le métal est le platine.

Les nanoparticules métalliques sont incluses dans les murs du matériau (A) et ne sont donc pas relarguées dans le milieu réactionnel comme cela peut être le cas pour les catalyseurs hétérogènes classiques.

Le matériau (A) de l'invention est de préférence sous la forme d'une poudre. De façon avantageuse, ces poudres présentent une grande surface spécifique ce qui permet d'obtenir une activité catalytique élevée. De plus, la mise en oeuvre, dans le système catalytique, d'un matériau (A) sous forme de poudre permet de façon avantageuse de pouvoir le séparer du milieu réactionnel, pour stopper la réaction d'hydrosilylation et/ou pour réutilisation. Cette

séparation peut être réalisée par filtration. Il est également possible de déposer cette poudre sur un substrat. Ce dernier mode est particulièrement indiqué pour mener des procédés en continu.

De façon avantageuse et préférée, le matériau (A) présente une double porosité. Les mésopores du matériau (A) présentent de préférence un diamètre de 2 à 50 nm, de préférence de 5 à 30 nm, par exemple de 5 à 20 nm. Les canaux microporeux, présents dans les murs du matériau (A), présentent de préférence un diamètre inférieur à 2 nm, de préférence de 0,5 à 2 nm. La taille des mésopores peut être déterminée par toute méthode connue de l'homme du métier, notamment par adsorption/désorption d'azote à 196°C (soit 77K) par la méthode BJH (Barrett, Joyner et Halenda) par exemple définie dans les techniques de l'ingénieur «Technique des matériaux pulvérulents ou poreux». La taille des micropores peut être déterminée par toute méthode connue de l'homme du métier et de préférence par adsorption/désorption d'azote à 196°C par la « méthode t » (en anglais « t-plot ») par exemple définie dans les techniques de l'ingénieur «Technique des matériaux pulvérulents ou poreux».

De préférence, le matériau structuré (A) présente une surface spécifique BET de 20 à 1200 $m^2/g$, de préférence de 300 à 1100 $m^2/g$. La surface spécifique BET est par exemple définie dans les techniques de l'ingénieur «Technique des matériaux pulvérulents ou poreux».

De façon surprenante, malgré la taille réduite des canaux microporeux dans les murs du matériau (A), ceux-ci permettent aux réactifs (composés (C) et composés (O)) et notamment aux composés organosiliciés de masses moléculaires et de viscosités importantes d'accéder aux nanoparticules métalliques. La demande de brevet WO2010/040926 précise des catalyseurs tels que ceux décrits dans la présente invention comprenant des nanoparticules métalliques dans les murs d'une charpente inorganique permettant l'hydrogénation du styrène. Cependant, le styrène a une viscosité proche de celle de l'eau et peut donc accéder facilement aux nanoparticules métalliques comprises dans les murs du matériau constitutif du catalyseur. Aussi l'homme du métier aurait pu s'attendre à ce que les composés organosiliciés, de tailles et de viscosités plus importantes, viennent colmater les pores du matériau (A) et n'aient pas accès aux nanoparticules métalliques.

Le matériau (A) selon l'invention peut être déposé sur un substrat pour former un système catalytique macrostructuré, le substrat peut par exemple être des billes métalliques, les parois d'un réacteur ou les parois d'un élément d'un réacteur (par exemple pale de mélangeur), etc. Le dépôt du matériau (A) sur le substrat peut se faire par toute méthode connue de l'homme du métier et notamment par les méthodes décrites dans les publications de Pérez et al (Chemical Engineering journal, 2010, 158, 325-322), Zhao et al (Catalysis Today, 2009, 147, 215-219) et Wei et al (Catalysis Today, 2009, 147, 66-70). De préférence, après dépôt du matériau (A) sur le substrat (ou support), le système catalytique obtenu est calciné afin d'éliminer toutes traces de composés susceptibles de boucher les pores du matériau (A).

De façon avantageuse, le matériau (A) comprend de 0,05 à 3% en poids de nanoparticules métalliques par rapport au poids total du matériau (A), de préférence de 0,1 à 1 % en poids, par exemple de 0,1 à 0,5% en poids.

De préférence, dans le procédé de l'invention le système catalytique peut être mis en oeuvre de nombreuses fois sans perte d'activité et sans lixiviation.

De façon avantageuse, toutes les caractéristiques préférées et avantageuses définissant le catalyseur peuvent être combinées entre-elles.

Bien que cela ne soit pas nécessaire, le catalyseur selon l'invention peut être traité par un flux de $H_2$ avant utilisation.

De préférence, dans le cadre de la présente invention, le matériau (A) est susceptible d'être obtenu par le procédé décrit dans la demande de brevet WO2010/040926 et dans la publication de Boualleg et al (Journal of Catalysis, 2011, 284, 184-193) auxquelles l'homme du métier peut se référer et qui sont incorporées ici par référence.

De préférence, le matériau (A) de l'invention est obtenu par un procédé comprenant les étapes suivantes :

a) disposer d'une suspension de nanoparticules hydrophiles de métal à l'état d'oxydation zéro stabilisées par des ligands non échangeables qui confèrent leur caractère hydrophile aux nanoparticules ; et
b) faire croître la charpente inorganique à partir d'un précurseur inorganique d'oxyde de silicium, autour des nanoparticules de métal zéro stabilisées par les ligands non échangeables, en présence d'un agent porogène ; et
c) éliminer l'agent porogène et au moins partiellement les ligands non échangeables.

Par « non-échangeables » on entend notamment que les ligands conférant le caractère hydrophile aux nanoparticules métalliques ne doivent pas s'échanger avec les agents porogènes. En effet, un tel échange aurait pour effet de rendre les nanoparticules métalliques hydrophobes, ces dernières viendraient alors se placer dans les pores du matériau et non dans les murs de la charpente inorganique.

De façon avantageuse, la nature non échangeable des ligands ajouté au fait qu'ils rendent les nanoparticules métalliques hydrophiles permet auxdites nanoparticules métalliques d'être localisées dans les murs et non dans les pores.

De façon avantageuse, ce procédé permet de faire croître la charpente inorganique du catalyseur directement autour des nanoparticules métalliques. Cela entraîne une répartition régulière des nanoparticules métalliques qui sont

bien espacées et réparties au sein du matériau (A) obtenu, ce qui limite leur frittage. Les nanoparticules métalliques sont ainsi stabilisées par la charpente inorganique du matériau (A).

A titre d'exemple de ligands hydrophiles non-échangeables conférant leur caractère hydrophile aux nanoparticules métalliques, on peut citer le 3-chloropropylsilane, le N-(3- trihydrogénosilylpropyl)-imidazole, le chlorobenzylsilane, le chlorodiméthylsilane, les sels de N-(3- trihydrogénosilylpropyl)alkylimidazolium ou les sels de N-(3-trihydrogénosilylpropyl)arylimidazolium, N-(benzyltrihydrogénosilyl)-imidazole, les sels de N-(benzyltrihydrogénosilyl)-alkylimidazolium ou les sels de N-(benzyltrihydrogénosilyl)-arylimidazolium, et aussi les sels de N- (benzyltrihydrogénosilyl)trialkylammonium ou le dibutyl-4,7,10- trioxaundécylstannane, etc. Les sels peuvent être des sels d'étain ou de germanium, de préférence d'étain. De tels ligands sont commerciaux, ou pourront être préparés selon des techniques bien connues de l'homme de l'art. Dans le cas de ligands comprenant un atome d'étain ou de germanium, on pourra se référer à F. Ferkous, Journal of Organometallic Chemistry, 1991,Volume 420, Issue 3, Pages 315-320 et à P.Riviere, Journal of Organometallic Chemistry, 49 (1973) 173-189.

La suspension de nanoparticules hydrophiles peut être une suspension colloïdale préparée selon les techniques bien connues de l'homme du métier, notamment à partir d'un précurseur de métal (0), par exemple $Pt(dba)_2$ (dba=dibenzylidène acetone), Ru(COD)(COT) (COD=cyclooctadiène ; COT=cyclooctatriène), qui est mis en présence des ligands hydrophiles non échangeables dans un solvant organique classique polaire (par exemple eau, alcool, THF, tetrahydrofurane, éther...) ou apolaire (par exemple hydrocarbure saturé ou insaturé), de préférence le THF. La synthèse des nanoparticules métalliques est réalisée sous pression d'hydrogène en présence d'un réducteur (par exemple $NaBH_4$) avantageusement avec 0,2 à 5 équivalents de ligands stabilisateurs par atome de métal engagé.

La croissance de la charpente inorganique du matériau (A) est réalisée par procédé sol-gel (L.L.Hench et al., Chem.Rev., 1990, 33-72 et S.Biz et al., Catal.Rev.-Sci.Eng, 1998, 0(3), 329-407). L'hydrolyse et la polycondensation du précurseur d'oxyde de silicium permettent la croissance de la charpente inorganique.

De préférence, la croissance de la charpente inorganique du matériau (A) est réalisée dans un milieu aqueux ou dans un mélange aqueux avec au moins un co-solvant de type alcool (par exemple alcool linéaire, notamment butanol), de type éther (par exemple THF) ou le diméthylformamide (DMF).

Il est également possible d'ajouter dans cette suspension un agent porogène.

La croissance de la charpente inorganique du matériau (A) sera, de préférence, réalisée avec au moins une des conditions suivantes, seules ou de préférence en combinaison :

- une température de 0 à 100°C, préférentiellement de 20 à 65°C,
- un ratio métal du précurseur inorganique/ agent porogène en moles de 30 à 300,
- un ratio métal des nanoparticules/métal du précurseur inorganique en poids de 0,001 à 50% ou encore inférieur à 10%, et de préférence de 0,001 à 5% et préférentiellement de 0,005 à 5%, ou encore de 0,05 à 5%,
- un pH de 0 à 10 et préférentiellement de 0 à 4,
- en présence d'un catalyseur d'hydrolyse-polycondensation du type acide par exemple HCl, basique, par exemple $NH_3$, KOH, NaOH ou nucléophile, par exemple NaF ou TBAF.

L'agent porogène est de préférence un composé amphiphile de type tensioactif, notamment un copolymère. La caractéristique essentielle de ce composé est qu'il est susceptible de former des micelles dans le mélange réactionnel, de façon à mener à une matrice minérale possédant une structure organisée.

A titre d'agent porogène on peut citer (EO = oxyde d'éthylène et PO = oxyde de propylène):

- les templates anioniques, tel que le dodécyl sulfate de sodium;
- les templates cationiques tels que les sels d'ammonium et notamment les sels de tétraalkylammonium comme ceux de cétyltrialkylammonium ou dodécyltrialkylammonium, les sels d'imidazolium tels que le bromure de 1- hexadécane-3-méthylimidazolium, les sels de pyridinium tels que le chlorure de n-hexadécylpyridinium;
- les templates non-ioniques, et notamment les amines, telles que l'hexadécylamine ou la dodecylamine;
- les oxydes d'alkylpolyéthylène ou d'alkylarylpolyéthylène, tels que le Brij® 52 ($C_{16}H_{33}O(CH_2CH_2O)_2H$), le Tergitol® 15-S-12 ($C_{11-15}H_{23-31}O(CH2CH2O)12H$), le Triton X® 25-100 ($C_{14}H_{22}O(C_2H_4O)_{n1}$ avec n1=9 à 10), le Montanox® 20 (Sorbitan.20EO.monooléyle ester), l'octylphénol-10 EO (p- $C_8H_{17}C_6H_4O(CH_2CH_2O)_{10}H$), le lauryl éther-n EO ($C_{12}H_{25}O(CH_2CH_2O)_{n2}H$, avec n2=2,4,8) ; - les templates de type polysorbate, tels que le Tween® 20 (nom IUPAC : polyoxyéthylène (20) sorbitan monolaurate) et 30 ;
- les copolymères à blocs amphiphiles, tels que les copolymères triblocs Pluronic® P123 ($EO_{20}$-$PO_{70}$-$EO_{20}$), le Pluronic® F127 ($EO_{77}$-$PO_{29}$-$EO_{77}$) ou le Pluronic® F108 ($EO_{132}$-$PO_{50}$-$EO_{132}$) ;
- les polymères (fonctionnels ou non) et notamment les polymères à blocs tels que le Pluronic® P123, le Pluronic® F127 ou F108 cités précédemment ou encore les polymères classiques du type PE (polyéthylène), PP (polypropylène), PMMA (polyméthacrylate de méthyle), polystyrène, etc.

De tels agents porogènes ont déjà été largement utilisés dans l'art antérieur.

L'élimination de l'agent porogène et des ligands peut être faite par toute méthode connue de l'homme du métier, notamment par calcination à l'air à 350°C ou par un traitement Fer/UV qui consiste à mettre en suspension le matériau obtenu dans une solution aqueuse d'acide sulfurique, d'ajouter une solution de $FeSO_4$ et de mélanger la solution obtenue à l'air, à température ambiante et sous irradiation UV.

L'homme du métier, de part ses connaissances générales, pourra choisir de préférence des conditions expérimentales (nature et taille de l'agent porogène, pH de la synthèse, rapport agent porogène/précurseur minéral, température, type de catalyseur d'hydrolyse-polycondensation) pour permettre l'obtention de murs d'épaisseur suffisante pour pouvoir y insérer les particules métalliques.

De façon particulièrement préférée, le catalyseur de l'invention est susceptible d'être obtenu par le procédé comprenant les étapes suivantes :

i) préparation d'une solution colloïdale de platine consistant à placer sous pression réduite à température ambiante un précurseur de nanoparticules métalliques, notamment de Pt(0), par exemple $Pt(dba)_2$, puis à ajouter du solvant organique par exemple THF et enfin un ligand hydrophile non-échangeable, de préférence le 3-chloropropylsilane, en solution dans un solvant organique, par exemple THF, le mélange obtenu est agité, éventuellement sous pression d'hydrogène notamment lorsque le précurseur de platine n'est pas facilement réductible ou si un défaut de ligand est mis en oeuvre ;
ii) préparation d'une solution homogène par mélange d'un agent porogène, par exemple Pluronic 123 ®, dans l'eau en présence de NaF ;
iii) ajout dans la solution obtenue à l'étape ii) de la solution colloïdale de l'étape i) et agitation vigoureuse ;
iv) évaporation des solvants organiques de la solution obtenue à l'étape iii) ;
v) préparation d'une solution par mélange de TEOS (tetraethylorthosilicate) et d'une solution aqueuse acide par exemple HCl jusqu'à un pH final d'environ 1,5 ;
vi) mélange des solutions obtenues aux étapes iv) et v) et agitation à une température comprise entre 20 et 40°C ;
vii) filtration de la solution de l'étape vi) et lavage du solide obtenu successivement avec de l'eau, de l'éthanol, de l'acétone et de l'éther ;
viii) élimination de l'agent porogène et des ligands par calcination à 350°C ou par traitement dans l'eau à pH acide sous UV en présence de sels de Fer(II) ou Fer(III).

LE TEOS en solution acide est pré-hydrolysé (étape v) puis la condensation se fait grâce à l'ajout de NaF en présence des nanoparticules métalliques (étape vi). Ces deux étapes permettent la croissance de la charpente inorganique.

Le procédé d'hydrosilylation selon la présente invention peut être mené à une température de 15 à 150°C, de préférence de 20 à 100°C, par exemple de 30 à 80°C.

Le procédé d'hydrosilylation selon l'invention peut être mis en oeuvre à l'air ou sous atmosphère inerte, par exemple sous atmosphère d'azote.

De manière générale, la réaction d'hydrosilylation peut être réalisée dans un solvant ou en l'absence de solvant. En variante, l'un des réactifs peut jouer le rôle de solvant, ce peut être le cas par exemple des composés (C). Des solvants appropriés sont ceux miscibles avec le composé organosilicié. Des exemples de solvants particuliers sont les hydrocarbures aliphatiques, par exemple pentane, hexane, heptane, pentaméthylheptane ou les fractions de distillation du pétrole ; les hydrocarbures aromatiques, par exemple benzène, toluène, xylène (ortho-, para- et méta-xylène) ; les hydrocarbures aliphatiques ou aromatiques halogénés, par exemple tétrachloroéthylène ; ou les éthers, par exemple tétrahydrofuranne ou dioxanne.

De préférence, dans le procédé de l'invention, la quantité de nanoparticules métalliques mise en oeuvre par rapport au poids total des composés (C) et (O) (les réactifs) est de 1 à 50 ppm, de préférence de 5 à 20 ppm.

De façon avantageuse, la quantité relative de composé (C) et de composé (O) peut être contrôlée.

Le rapport molaire $R = \frac{\textit{nombre d'insaturations des composés C}}{\textit{nombre de groupes SiH des composés O}}$ peut varier de 1:100 à 25:1, de préférence de 1:100 à 10:1.

De préférence, dans le cadre de l'invention, R varie de 0,01 à 2.

Il est intéressant dans certains cas d'utiliser des ratios R inférieurs à 1 afin d'avoir une hydrosilylation partielle et d'obtenir un milieu réactionnel comportant toujours des groupes Si-H n'ayant pas réagi. Le procédé d'hydrosilylation est alors qualifié de partiel (on peut également parler de fonctionnalisation partielle, la fonctionnalisation correspondant alors à la fonctionnalisation d'un composé organosilicié c'est-à-dire à la réaction entre les groupes Si-H des composés organosiliciés et les composés comprenant au moins une insaturation).

Le matériau (A) mis en oeuvre dans le cadre de la présente invention présente l'avantage d'avoir des nanoparticules métalliques incorporées dans les murs de la charpente inorganique. Cette localisation des nanoparticules métalliques dans les murs permet une stabilisation du métal qui n'est pas relargué en phase homogène dans le milieu réactionnel. Cela permet avantageusement de pouvoir contrôler la réaction d'hydrosilylation et d'obtenir de façon simple des compositions comprenant des composés organosiliciés partiellement fonctionnalisés (comprenant des groupes SiH n'ayant pas réagi). Cela permet également d'obtenir des compositions comprenant des composés organosiliciés fonctionnalisés avec différents composés (C).

Aussi dans un mode de réalisation particulier, le procédé de l'invention est un procédé d'hydrosilylation partielle (P1) de composés organosiliciés (O) par un composé (C) comprenant au moins une insaturation. Dans ce mode de réalisation particulier du procédé de l'invention, R varie de 0,01 à 0,99.

Afin d'avoir cette fonctionnalisation partielle il est également possible d'introduire le composé (C) en excès par rapport aux groupes Si-H et de supprimer du milieu réactionnel le système catalytique, par exemple par filtration, après obtention du taux de fonctionnalisation souhaitée.

Aussi, le procédé selon l'invention peut comprendre une étape d'élimination du système catalytique après obtention de la conversion désirée.

Un tel procédé de fonctionnalisation partielle était difficilement envisageable avec les catalyseurs hétérogènes de l'état de la technique puisque ceux-ci relarguent généralement du platine en phase homogène dans le milieu réactionnel, rendant les milieux réactionnels peu stables au stockage.

Dans un autre mode de réalisation particulier, le procédé de l'invention permet de fonctionnaliser avec au moins deux composés (C), les composés organosiliciés (O) selon un procédé (P2) comprenant les étapes suivantes :

a) réaction du composé organosilicié (O) avec un premier composé (C), selon le procédé (P), R variant de 0,01 à 0,99; et

b) réaction du composé organosilicié obtenu à l'étape a) avec un second composé (C) différent de celui mis en oeuvre à l'étape a), selon le procédé (P), le ratio R de cette étape b) concernant la mise en oeuvre d'un second composé (C) variant de 0,01 à 1,

les étapes a) et b) étant réalisées en présence d'un catalyseur tel que défini plus haut. Les étapes a) et b) peuvent être mises en oeuvre plusieurs fois dans le cadre du procédé de l'invention avec des composés (C) différents. L'homme du métier peut alors, de part ses connaissances générales déterminer les différents ratio R à appliquer, dans les différentes étapes et suivant les différents composés (C) mis en oeuvre.

Les procédés (P), (P1) et (P2) selon l'invention peuvent être mis en oeuvre en batch ou en continu. De préférence, ils sont mis en oeuvre en continu.

Lorsque le procédé est mis en oeuvre en continu, le réacteur est alors choisi parmi les réacteurs connus de l'homme du métier pour mener les procédés en continu. Notamment il est choisi parmi les réacteurs à lit fixe, les microréacteurs et les réacteurs tubulaires.

De préférence, lorsque le procédé est mis en oeuvre en continu, le matériau (A) est déposé sur un substrat, par exemple des billes métalliques qui seront utilisées dans le cas d'un réacteur à lit fixe. Le matériau (A) pourra également être déposé sur les parois ou sur un élément constitutif du réacteur.

Le dépôt du matériau (A) sur les substrats appropriés peut se faire par toute méthode connue de l'homme du métier et notamment par les méthodes décrites dans les publications de Pérez et al (Chemical Engineering journal, 2010, 158, 325-322), Zhao et al (Catalysis Today, 2009, 147, 215-219) et Wei et al (Catalysis Today, 2009, 147, 66-70).

Il est également décrit un dispositif pour la mise en oeuvre du procédé en continu selon l'invention, ledit dispositif comprenant un réacteur à lit fixe comprenant le matériau (A) ou comprenant un réacteur dont au moins un des éléments est recouvert du matériau (A), notamment par les méthodes décrites ci-dessus. Le réacteur est de préférence choisi parmi les réacteurs connus de l'homme du métier pour mener les procédés en continu, notamment c'est un microréacteur ou un réacteur tubulaire.

L'invention concerne également l'utilisation du matériau (A) comme catalyseur d'hydrosilylation entre un composé organosilicié et au moins un composé comprenant au moins une insaturation.

La figure 1 représente un schéma du matériau (A) selon l'invention. Le matériau (A) comprend des murs (1) et des pores (2). Des nanoparticules métalliques (3) sont incorporées dans les murs (1). Dans cette figure ep représente l'épaisseur des murs et Dp le diamètre des pores.

La présente demande va maintenant être décrite à l'aide d'exemples non limitatifs.

## Exemples

THF = Tétrahydrofurane

Exemple 1 : Préparation de la suspension colloïdale de platine

Le procédé est tel que décrit dans WO2010040926 et dans la publication Boualleg et al., 2009, Chem. Mater, 21, 775-777.

100 mg (0,15 mmol) de $Pt(dba)_2$ (dba= dibenzylideneacétone) sont placés dans un réacteur en verre et sous pression réduite pendant 30 minutes à température ambiante. 90 mL de THF sont ensuite ajoutés. 10 mL de THF contenant 25 mg de 3-chloropropylsilane (0,15 mmol) sont ajoutés à température ambiante. La solution obtenue est pressurisée à 300 kPas (3 bar) d'hydrogène sous agitation pendant 12 heures.

Un test d'hydrophilie est réalisé en plaçant la suspension de nanoparticules obtenue dans un récipient contenant un mélange biphasique eau/heptane, l'eau étant située en dessous de l'heptane dans le récipient : les nanoparticules métalliques vont dans la phase aqueuse et non dans la phase heptane, ce qui met en évidence leur caractère hydrophile.

Exemple 2 : Préparation du catalyseur

Le procédé est tel que décrit dans WO2010040926 et dans la publication Boualleg et al., 2009, Chem. Mater, 21, 775-777.

Dans un erlenmeyer de 150 mL, 0,5g (86$\mu$mol) du tensioactif structurant Pluronic® 123 sont ajoutés à 50 mL d'eau distillée contenant 20 mg de NaF, sous agitation vigoureuse. Après obtention d'une solution homogène, 20 ml d'une solution colloïdale de nanoparticules de platine hydrophiles (24 $\mu$mol) préparées comme indiqué à l'exemple 1, en solvant THF, sont ajoutés. Les mélange est agité vigoureusement pendant 2 heures. Le THF est ensuite totalement évaporé sous pression réduite. Dans un deuxième erlenmeyer 5g (24 mmol) de TEOS sont additionnés à une solution aqueuse d'HCl (pH final de 1,5) et hydrolysés pendant 3 heures. Les deux mélanges réactionnels sont portés à 35°C. Les deux mélanges sont ensuite mis en contact et le tout est finalement agité à 35°C pendant 24 h. Le solide gris-beige obtenu est filtré, puis lavé avec deux fois 20 mL d'eau, d'éthanol, d'acétone et d'éther.

Le solide obtenu est ensuite traité par le procédé suivant afin d'éliminer l'agent porogène et les ligands :
1g du matériau obtenu est placé dans un tube en verre de type pyrex et calciné sous air sec à 350°C (rampe de température : 2 °C/min) pendant 10 heures pour donner le catalyseur actif.

Exemple 3 : Description des catalyseurs mis en oeuvre dans les exemples

Différents catalyseurs sont mis en oeuvre dans les exemples 4 et 5 qui suivent. Ces catalyseurs sont les suivants :

- catalyseur A : Pt/PS-DVB H2 160 : platine supporté sur polystyrène-divinylbenzène obtenu à partir de précurseur $Pt(acac)_2$, ayant subit après préparation un traitement à l'hydrogène à 160°C. Ce catalyseur comprend 1% en poids de platine.
- catalyseur B : Pt/PS-DVB H2 190 : platine supporté sur polystyrène-divinylbenzène obtenu à partir de précurseur $Pt(acac)_2$, ayant subit après préparation un traitement à l'hydrogène à 190°C. Ce catalyseur comprend 1% en poids de platine.
- catalyseur C : Platine supporté sur charbon de la société Alfa Aesar (Pt/C Alfa Aesar). Ce catalyseur comprend 1% en poids de platine.
- catalyseur D à F : trois lots commerciaux différents de platine supporté sur charbon de la société Evonik (Pt/C Evonik AZ, Pt/C Evonik L11, EvonikL12). Ces catalyseurs comprennent 3% en poids de platine
- catalyseur G : Platine supporté sur silice non poreuse traité à l'air à 320°C ($Pt/SiO_2$ Air 320). Ce catalyseur comprend 1% en poids de platine.
- catalyseur H : Platine supporté sur silice non poreuse traité à l'hydrogène à 450°C ($Pt/SiO_2$ $H_2$ 450). Ce catalyseur comprend 1% en poids de platine.
- catalyseur I : silice mésoporeuse comprenant les nanoparticules de platine dans les pores (Pt/SBA (canaux)). Ce catalyseur comprend 0,3% en poids de platine.
- catalyseur J : silice mésoporeuse comprenant les nanoparticules de platine dans les pores (Pt/SBA (canaux)). Catalyseur selon l'invention obtenu par le procédé décrit à l'exemple 2. Ce catalyseur comprend 0,3% en poids de platine.

Les catalyseurs A et B ont été synthétisés selon le procédé suivant :
Une solution de 220 mg de Pt $(acac)_2$ et 30ml $CHCl_3$ avec 10g de PS-DVB (300-800$\mu$m, Aldrich, ref 426989) est préparée. Le mélange est laissé dans un ballon fermé à température ambiante pendant 24h, le ballon est ensuite ouvert et le solvant s'évapore pendant 24h à température ambiante.

Le catalyseur subit ensuite le traitement suivant :

Catalyseur A : 30min sous N2 à 25°C puis 3h sous H2 à 160 °C (catalyseur noté Pt/PS-DVB 160).
Catalyseur B : 30min sous N2 à 25°C puis 5h sous H2 à 190 °C (catalyseur noté Pt/PS-DVB 190).

Les catalyseurs C à F sont disponibles dans le commerce.

Les catalyseurs G et H ont été préparés selon le procédé suivant :
La silice (silicon oxide Alfa Aesar, catalyst support, low surface area, ref 43861) subit le traitement suivant : Chauffage 6°C/min jusqu'à 500°C sous air 5 heures puis vide secondaire ($10^{-5}$ mBar) pendant 5 heure. La silice est ensuite imprégnée d'une solution colloïdale de Pt (30mg de Pt au total soit 1 % en poids) dans le THF avec 1.45mL THF/g de silice. Le catalyseur obtenu est séché sous flux d'argon pendant 48 heures puis subit le traitement suivant :
Catalyseur G : calcination à 320°C sous air
Catalyseur H : traitement sous hydrogène à 450°C.

Le catalyseur I a été synthétisé conformément au procédé décrit dans la publication Boualleg et al., 2009, Chem. Mater, 21, 775-777.

Le catalyseur J a été synthétisé selon l'exemple 2.

<u>Exemple 4 : Réaction d'hydrosilylation - Synthèse d'un polyméthyloctylsiloxane</u>

La réaction suivante a été étudiée :

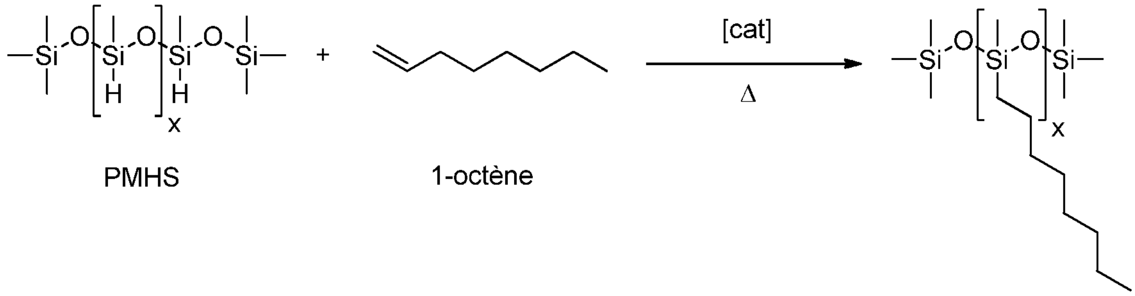


PMHS 1-octène

Les expériences ont été conduites dans un réacteur en verre de 300mL équipé d'un arbre d'agitation à pales inclinées en verre. Trois contrepales en verre de 5mm de large ont été façonnées contre les parois. Le réacteur est placé dans un bain thermostaté et la température peut être régulée au degré près.

Le réacteur est équipé d'un réfrigérant, et d'un thermocouple placé dans un doigt de gant en verre au sein du milieu réactionnel. Le polyméthylhydrogénosiloxane (également noté PMHS) est introduit dans le réacteur à l'aide d'un pousse seringue.

Un polyméthylhydrogénosiloxane (dont la concentration en groupe [SiH] est de 1,58 mol/100g et qui présente uneviscosité de 25 mPa.s) est ajouté goutte à goutte sous atmosphère inerte d'azote et à 70°C à du 1-octène (ce qui équivaut à un ratio $R=\frac{\text{nombre d'insaturations des composés } C}{\text{nombre de groupes SiH des composés } O}$ d'environ 1,3) en présence des catalyseurs de l'exemple 3.

Les conditions réactionnelles des essais selon les catalyseurs sont résumées dans le tableau ci-dessous :

| Catalyseur | masse 1-octène | masse PMHS | masse catalyseur (mg) | %Pt dans le catalyseur | Ppm de Pt dans le milieu |
|---|---|---|---|---|---|
| A : Pt/PS-DVB $H_2$ 160 | 39,4 | 17,3 | 62 | 1 | 10,9 |
| B : Pt/PS-DVB $H_2$ 190 | 42 | 16,9 | 71,7 | 1 | 12,2 |
| C : Pt/C Alfa Aesar 1 % | 40,2 | 17,4 | 71,4 | 1 | 12,4 |
| D : Pt/C Evonik AZ | 41,8 | 16,9 | 13,9 | 3 | 7,1 |

(suite)

| Catalyseur | masse 1-octène | masse PMHS | masse catalyseur (mg) | %Pt dans le catalyseur | Ppm de Pt dans le milieu |
|---|---|---|---|---|---|
| E : Pt/C Evonik L11 | 41,8 | 17,4 | 14,9 | 3 | 7,6 |
| F :Pt/C EvonikL12 | 41,6 | 17,3 | 16,9 | 3 | 8,6 |
| G: Pt/$SiO_2$ Air 320 | 40 | 17,4 | 38,5 | 1 | 6,7 |
| H : Pt/$SiO_2$ $H_2$ 450 | 40 | 17,5 | 35,2 | 1 | 6,1 |
| I : Pt/SBA (canaux) | 40 | 17,2 | 110,5 | 0,3 | 5,8 |
| J : Pt/SBA(murs) | 40 | 17,1 | 103,6 | 0,3 | 5,4 |

Ces exemples montrent le cas où la réaction d'hydrosilylation est menée avec un excès de composé (C) (R compris entre 1,3 et 1,4).

Dès la fin de la coulée du PMHS, un premier prélèvement est effectué et un dosage gazométrique est réalisé après filtration pour évaluer l'avancement de la réaction en fin de coulée via la consommation des fonctions hydrogénosiloxanes. Cela permet d'obtenir le TON (TON = Turn Over Number exprime le nombre de mol de SiH converti par rapport au nombre de mol de platine initial) atteint à la fin de la coulée. Ces résultats sont regroupés dans la colonne TON à la fin de coulée dans le tableau ci-dessous.

En parallèle, un second prélèvement du milieu réactionnel est effectué. Le milieu réactionnel prélevé est filtré pour éliminer le catalyseur hétérogène et placé à nouveau à 70°C pendant 5 heures. L'activité observée est alors uniquement due qu'aux nanoparticules de Pt(0) qui ont été relarguées dans le milieu réactionnel. Cela permet d'obtenir le TON atteint en mode homogène dû au platine qui aura été solubilisé dans le milieu réactionnel et donc de mettre en évidence le relargage de platine dans le milieu réactionnel. Ces résultats sont regroupés dans la colonne TON 5h supplémentaire (homogène) dans le tableau ci-dessous.

5 heures après la fin de la coulée de PMHS, un nouveau prélèvement du milieu réactionnel dans le réacteur est réalisé afin de suivre l'avancement de la réaction et par conséquent le TON total sur 5 heures. Ce TON total prend en compte le TON à la fin de la coulée, le TON dû au relargage du platine dans le milieu réactionnel (soit le TON 5h homogène) et le TON dû à l'activité du catalyseur hétérogène. Il est ainsi possible d'obtenir le TON atteint dû au catalyseur hétérogène (TON 5h supplémentaire hétérogène) en soustrayant au TON total le TON à la fin de coulée et le TON 5h homogène. Les résultats sont exprimés en nombre de moles de SiH transformées par mole de platine initiale :

| Catalyseur | TON à la fin de coulée | TON 5h supplémentaire (homogène) | TON Total | TON 5h supplémentaire (hétérogène) |
|---|---|---|---|---|
| A | 15602 | 47352 | 62954 | 0 |
| B | 9584 | 49 | 14413 | 4780 |
| C | 6015 | 1788 | 29262 | 21459 |
| D | 42894 | 14238 | 99064 | 41933 |
| E | 35354 | 9906 | 93065 | 47805 |
| F | 31158 | 8391 | 79819 | 40270 |
| G | 46745 | 45705 | 99595 | 7145 |
| H | 13029 | 605 | 17391 | 3757 |
| I | 21229 | 55352 | 105028 | 28447 |
| J | 21287 | 4855 | 83281 | 57139 |

Les résultats mettent en avant que les catalyseurs Pt/PS-DVB ayant subi un traitement thermique pour éviter la lixiviation des nanoparticules de platine présentent certes un faible relargage des nanoparticules de Pt mais présentent cependant une faible activité catalytique.

Les résultats mettent également en évidence que les catalyseurs Pt/C sont peu répétables. En effet, selon le fournisseur ou le lot les catalyseurs Pt/C présentent, pour la réaction d'hydrosilylation, des activités bien différentes. Au contraire, la réaction d'hydrosilylation selon l'invention a été réalisée avec divers lots de catalyseurs de l'invention différents et les résultats se sont révélés être reproductibles. De plus, ces résultats montrent que les catalyseurs Pt/C sont à l'origine d'un relargage important des nanoparticules de Pt dans le milieu réactionnel.

Les résultats obtenus avec Pt/$SiO_2$ traité à 320°C mettent en évidence un important relargage de Pt dans le milieu. Le même catalyseur traité à 450°C permet certes de réduire le relargage de Pt, mais l'activité s'en retrouve très largement limitée.

Les résultats obtenus avec le Pt/SBA (canaux) montrent également un très fort relargage du Pt dans le milieu.

En comparaison, le catalyseur selon l'invention présente de manière avantageuse un faible relargage du Pt dans le milieu tout en présentant une bonne activité. En effet, pour le catalyseur de l'invention, l'activité après 5 heures de réaction est principalement due au catalyseur hétérogène et non au platine relargué dans le milieu réactionnel comparativement notamment au catalyseur pour lequel les nanoparticules sont dans les pores. Cela permet de mettre en évidence que les nanoparticules de Pt sont piégées dans les murs du catalyseur et sont ainsi protégées de la lixiviation tout en restant accessibles aux réactifs pour permettre l'hydrosilylation.

Ces résultats mettent également en avant que, de façon surprenante, de bons rendements d'hydrosilylation sont obtenus malgré des nanoparticules bien intégrées dans les murs du matériau (A), et donc pour l'homme du métier a priori difficile d'accès, même avec une viscosité du composé (O) testé près de 15 fois supérieure à celle de l'eau.

Exemple 5 : Réaction d'hydrosilylation partielle - Synthèse d'un Poly(méthylhydrogénosiloxanes-*co*-méthyloctylsiloxane)

Cet exemple présente le cas d'une réaction d'hydrosilylation menée avec un défaut de composé (C).

Un pré-mélange de polyméthylhydrogénosiloxane (dont la concentration en groupe [SiH] est de 1,58 mol/100g et qui présente une viscosité de 25 mPa.s) et de 1-octène (ce qui équivaut à un ratio $R = \frac{\text{nombre d'insaturations des composés } C}{\text{nombre de groupes SiH des composés } O}$ 0,1) est ajouté goutte-à-goutte sous atmosphère d'azote et à 70°C à une solution du catalyseur hétérogène J (catalyseur selon l'invention obtenu par le procédé décrit à l'exemple 2 : Pt/SBA (murs)) (5 ppm Pt massique par rapport aux réactifs) dilué dans du toluène. Après la fin de coulée, le milieu réactionnel est maintenu à 70°C pendant 1 heure puis un prélèvement est réalisé pour analyse RMN $^1H$ ($CDCl_3$) afin de contrôler l'avancement de la réaction. Lorsque le milieu réactionnel n'évolue plus, celui-ci est ramené à température ambiante puis filtré afin d'éliminer le catalyseur hétérogène J. Puis le milieu réactionnel est placé sous vide (15 mbar) afin d'éliminer le solvant (15 mbar) à 80°C. Le produit fini est alors conditionné sous air et stocké à température ambiante. Celui-ci est stable dans le temps sans phénomène de gélification en surface.

Contre-exemple 1 : Réaction d'hydrosilylation partielle - Synthèse d'un Poly(méthylhydrogénosiloxanes-*co*-méthyloctylsiloxane)

Cet exemple présente le cas d'une réaction d'hydrosilylation menée avec un défaut de composé (C).

Un pré-mélange de polyméthylhydrogénosiloxane dont la concentration en groupe [SiH] est de 1,58 mol/100g et qui présente une viscosité de 25 mPa.s) et de 1-octène (ce qui équivaut à un ratio $R = \frac{\text{nombre d'insaturations des composés } C}{\text{nombre de groupes SiH des composés } O}$ de 0,1) est ajouté goutte-à-goutte sous atmosphère d'azote et à 70°C à une solution de catalyseur homogène Platine de Karstedt (5 ppm Pt massique par rapport aux réactifs) dilué dans du toluène. Après la fin de coulée, le milieu réactionnel est maintenu à 70°C pendant 1 heure puis un prélèvement est réalisé pour analyse RMN $^1H$ ($CDCl_3$) afin de contrôler l'avancement de la réaction. Lorsque le milieu réactionnel n'évolue plus, celui-ci est soit directement dévolatilisé sous vide (15 mbar) à 80°C soit préalablement traité au noir de carbone 2S (0,5% massique/milieu réactionnel) pendant 2 heures avant d'être placé sous vide pour éliminer le solvant. Le produit fini est alors conditionné sous air et stocké à température ambiante. Celui-ci n'est pas stable. Il évolue rapidement en moins de ¼ d'heure avec la formation en surface d'une croûte de quelques cm qui durcit dans le temps et ceci que le produit fini ait été traité au noir de carbone ou pas.

## Revendications

1. **1.** Procédé d'hydrosilylation (P) d'au moins un composé (C) comprenant au moins une insaturation en présence d'un composé organosilicié (O) comprenant au moins un atome d'hydrogène lié directement à un atome de silicium et d'un système catalytique d'hydrosilylation comprenant un matériau poreux structuré (A) comportant des pores et une charpente inorganique composée de murs d'oxyde de silicium dans lesquels sont contenues des nanoparticules métalliques.

**2.** Procédé selon la revendication 1, dans lequel le matériau (A) est sous forme de poudre.

**3.** Procédé selon la revendication 2, dans lequel le matériau (A) sous forme de poudre est supporté sur un substrat.

**4.** Procédé selon l'une des revendications 1 à 3, dans lequel les nanoparticules métalliques sont des nanoparticules de platine.

**5.** Procédé selon l'une des revendications 1 à 4, pour lequel le matériau (A) présente une double porosité avec des mésopores présentant un diamètre de 2 à 50 nm et des canaux microporeux, présents dans les murs du matériau (A), présentant un diamètre inférieur à 2 nm.

**6.** Procédé selon l'une des revendications 1 à 5, pour lequel le matériau (A) présente une surface spécifique BET de 20 à 1200 $m^2/g$, de préférence de 300 à 1100 $m^2/g$.

**7.** Procédé selon l'une quelconque des revendications 1 à 6, pour lequel les nanoparticules métalliques présentent un diamètre moyen de 1 à 10 nm.

**8.** Procédé selon l'une quelconque des revendications 1 à 7 pour lequel les murs de la charpente inorganique du matériau (A) présentent une épaisseur supérieure ou égale à 3 nm, de préférence une épaisseur de 5 à 15 nm.

**9.** Procédé selon l'une quelconque des revendications 1 à 8, pour lequel la charpente inorganique du matériau (A) présente une structure vermiculaire, cubique ou hexagonale, de préférence hexagonale deux dimensions.

**10.** Procédé selon l'une quelconque des revendications 1 à 9, pour lequel le composé (C) comprend une ou plusieurs fonctions alcène et de 2 à 40 atomes de carbone ou une ou plusieurs fonctions alcynes et de 2 à 40 atomes de carbone.

**11.** Procédé selon l'une quelconque des revendications 1 à 10, pour lequel le composé (C) est choisi dans le groupe constitué par :

- les acrylates et les méthacrylates d'alkyles en $C_1$ à $C_4$ ;
- l'acide acrylique ou l'acide méthacrylique ;
- l'acétylène ;
- les alcènes, de préférence l'octène et plus préférentiellement le 1-octène ;
- les diènes non conjugués et de préférence l'hexadiène ou l'octadiène ;
- l'alcool allylique ;
- l'allylamine ;
- l'éther d'allyle et glycidyle ;
- l'éther d'allyle et de pipéridine et de préférence l'éther d'allyle et de pipéridine stériquement encombrée ;
- le styrène et de préférence l'alpha-méthyl-styrène ;
- le 1,2-époxy-4-vinylcyclohexane ;
- les alcènes chlorés et de préférence le chlorure d'allyle ;
- les alcènes fluorés et de préférence le 4,4,5,5,6,6,7,7,7-nonafluoro-1-heptene ;

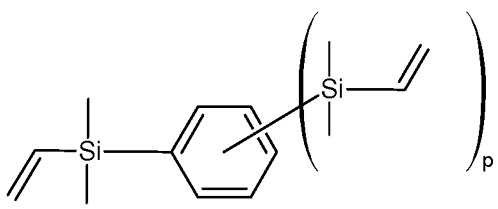

,

avec p valant 1 ou 2 ;

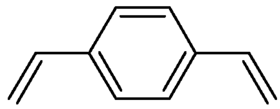

;

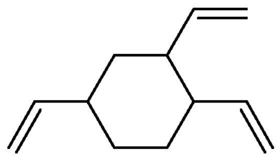

;

ou

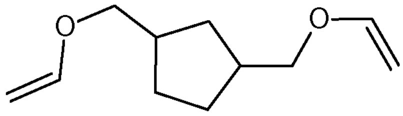

,

et leurs mélanges.

**12.** Procédé selon l’une quelconque des revendications 1 à 11, pour lequel le composé (O) est choisi parmi le groupe constitué par :

- les composés hydrogénosilane de formule (III) :

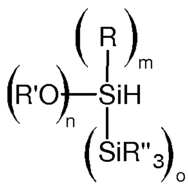

(III)

dans laquelle :

- R représente, indépendamment les uns des autres, un atome d’hydrogène ; un atome d’halogène, de préférence le chlore ; un groupe alkyle éventuellement substitué par un ou plusieurs groupes aryles ou cycloalkyles, par un ou plusieurs atomes d’halogène et/ou par une ou plusieurs fonctions cétone ; un groupe cycloalkyle éventuellement substitué par un ou plusieurs groupes alkyles et/ou par un ou plusieurs atomes d’halogène ; ou un groupe aryle éventuellement substitué par un ou plusieurs groupes alkyles et/ou par un ou plusieurs atomes d’halogène ;
- R’ représente, indépendamment les uns des autres, un groupe alkyle éventuellement substitué par un ou plusieurs groupes aryles ou cycloalkyles, par un ou plusieurs atomes d’halogène et/ou par une fonction cétone ; un groupe cycloalkyle éventuellement substitué par un ou plusieurs groupes alkyles et/ou par un ou plusieurs atomes d’halogène ; ou un groupe aryle éventuellement substitué par un ou plusieurs groupes alkyles et/ou par un ou plusieurs atomes d’halogène ;
- R" représente, indépendamment les uns des autres, un atome d’hydrogène ; un atome d’halogène, de préférence le chlore ; un groupe alkyle éventuellement substitué par un ou plusieurs groupes aryles ou cycloalkyles et/ou par un ou plusieurs atomes d’halogène ; un groupe cycloalkyle éventuellement substitué par un ou plusieurs groupes alkyles et/ou par un ou plusieurs atomes d’halogène ; ou un groupe aryle éventuellement substitué par un ou plusieurs groupes alkyles et/ou par un ou plusieurs atomes d’halogène ; et
- m, n et o sont des nombres entiers valant 0, 1, 2 ou 3, et m+n+o = 3,

R, R’ et R" étant identiques ou différents ;

- les polyorganosiloxanes comprenant :

(i) au moins un motif siloxyle de formule (IV)

$$H_d Z^3{}_e SiO_{\frac{4-(d+e)}{2}} \quad \text{(IV)}$$

dans laquelle :

- d=1 ou 2, de préférence d=1
- e=0, 1 ou 2
- d+e=1, 2 ou 3,
- le(s) symbole(s) $Z^3$, identiques ou différents, représentent un groupe hydrocarboné monovalent ayant de 1 à 30 atomes de carbone éventuellement substitué par des hétéroatomes ou des radicaux comprenant des hétéroatomes et de préférence choisi parmi le groupe constitué par des groupes alkyles ayant de 1 à 8 atomes de carbone inclus et les groupes aryles, et encore plus préférentiellement choisi parmi le groupe constitué par un radical méthyle, éthyle, propyle, 3,3,3-trifluoropropyle, xylyle, tolyle et phényle, de préférence phényle ou méthyle, de préférence méthyle ; et

(ii) éventuellement au moins un motif siloxyle de formule (V)

$$Z^2{}_c SiO_{\frac{4-c}{2}} \quad \text{(V)}$$

dans laquelle :

- c= 0, 1, 2 ou 3, de préférence 1, 2 ou 3 ;
- le(s) symbole(s) $Z^2$, identiques ou différents, représentent un groupe hydrocarboné monovalent ayant de 1 à 30 atomes de carbone éventuellement substitué par des hétéroatomes ou des radicaux comprenant des hétéroatomes et de préférence choisi parmi le groupe constitué par des groupes alkyles ayant de 1 à 8 atomes de carbone inclus et les groupes aryles, et encore plus préférentiellement choisi parmi le groupe constitué par un radical méthyle, éthyle, propyle, 3,3,3-trifluoropropyle, xylyle, tolyle et phényle, de préférence phényle ou méthyle, de préférence méthyle,

et leurs mélanges.

**13.** Procédé selon l'une quelconque des revendications 1 à 12 pour lequel le rapport molaire $R=\frac{nombre\ d'insaturations\ des\ composés\ C}{nombre\ de\ groupes\ SiH\ des\ composés\ O}$ varie de 0,01 à 2.

**14.** Procédé selon l'une quelconque des revendications 1 à 13, pour lequel la quantité de nanoparticules métalliques mise en oeuvre par rapport au poids total des composés (C) et (O) est de 1 à 50 ppm, de préférence de 5 à 20 ppm.

**15.** Procédé selon l'une quelconque des revendications 1 à 14, pour lequel le rapport molaire $R=\frac{nombre\ d'insaturations\ des\ composés\ C}{nombre\ de\ groupes\ SiH\ des\ composés\ O}$ varie de 0,01 à 0,99.

**16.** Procédé d'hydrosylilation selon l'une quelconque des revendications 1 à 14 comprenant les étapes suivantes :

a) réaction du composé organosilicié (O) avec un premier composé (C), selon le procédé (P), R variant de 0,01 à 0,99; et
b) réaction du composé organosilicié obtenu à l'étape a) avec un second composé (C) différent de celui mis

en oeuvre à l'étape a), selon le procédé (P), le ratio R de cette étape b) concernant la mise en oeuvre d'un second composé (C) variant de 0,01 à 1,

les étapes a) et b) étant réalisées en présence d'un système catalytique tel que défini aux revendications 1 à 14.

**17.** Procédé selon l'une quelconque des revendications 1 à 16 **caractérisé en ce qu'**il est mené en continu.

**18.** Procédé selon l'une quelconque des revendications 1 à 17 **caractérisé en ce qu'**il est mis en oeuvre à une température de 20 à 100°C.

**19.** Utilisation du matériau (A) selon l'une des revendications 1 à 14 comme système catalytique d'hydrosilylation pour des réactions entre un composé organosilicié (O) et un composé (C) comprenant au moins une insaturation.

**Patentansprüche**

**1.** Verfahren zur Hydrosilylierung (P) mindestens einer Verbindung (C), die mindestens eine Ungesättigtheit in Anwesenheit einer Organosiliziumverbindung (O) enthält, die mindestens ein direkt an ein Siliziumatom gebundenes Wasserstoffatom umfasst, und eines katalytischen Systems der Hydrosilylierung, das ein strukturiertes poröses Material (A) enthält, das Poren und ein anorganisches Gitter, das aus Siliziumoxidwänden zusammengesetzt ist, in denen metallische Nanopartikel enthalten sind, enthält.

**2.** Verfahren nach Anspruch 1, bei dem das Material (A) pulverförmig ist.

**3.** Verfahren nach Anspruch 2, bei dem das pulverförmige Material (A) auf ein Substrat aufgebracht ist.

**4.** Verfahren nach einem der Ansprüche 1 bis 3, bei dem die metallischen Nanopartikel Platin-Nanopartikel sind.

**5.** Verfahren nach einem der Ansprüche 1 bis 4, bei dem das Material (A) eine doppelte Porosität mit Mesoporen, die einen Durchmesser von 2 bis 50 nm aufweisen, und mikroporösen Kanälen, die in den Wänden des Materials (A) vorhanden sind und einen Durchmesser kleiner als 2 nm aufweisen, aufweist.

**6.** Verfahren nach einem der Ansprüche 1 bis 5, bei dem das Material (A) eine spezifische Oberfläche BET von 20 bis 1200 $m^2/g$, vorzugsweise von 300 bis 1100 $m^2/g$, aufweist.

**7.** Verfahren nach einem beliebigen der Ansprüche 1 bis 6, bei dem die metallischen Nanopartikel einen mittleren Durchmesser von 1 bis 10 nm aufweisen.

**8.** Verfahren nach einem beliebigen der Ansprüche 1 bis 7, bei dem die Wände des anorganischen Gitters des Materials (A) eine Dicke größer oder gleich 3 nm, vorzugsweise eine Dicke von 5 bis 15 nm, aufweisen.

**9.** Verfahren nach einem beliebigen der Ansprüche 1 bis 8, bei dem das anorganische Gitter des Materials (A) eine vermikulare, kubische oder hexagonale Struktur, vorzugsweise hexagonal in zwei Dimensionen, aufweist.

**10.** Verfahren nach einem beliebigen der Ansprüche 1 bis 9, bei dem die Verbindung (C) eine oder mehrere Alkenfunktionen von 2 bis 40 Kohlenstoffatomen oder eine oder mehrere Alkinfunktionen von 2 bis 40 Kohlenstoffatomen enthält.

**11.** Verfahren nach einem beliebigen der Ansprüche 1 bis 10, bei dem die Verbindung (C) ausgewählt aus der Gruppe, die besteht aus:

- Acrylaten und $C_1$- bis $C_4$-Alkylmetacrylaten;
- Acrylsäure oder Metacrylsäure;
- Acetylen;
- Alkenen, vorzugsweise Okten und noch bevorzugter 1-Okten;
- nicht konjugierten Dienen und vorzugsweise Hexadien oder Oktadien;
- Allylalkohol;
- Allylamin;

- Allyl- und Glycidylether;
- Allyl- und Piperidinether und vorzugsweise sterisch gehinderter Allyl- und Piperidinether;
- Styren und vorzugsweise Alpha-Methylstyren;
- 1,2-Epoxy-4-Vinylcyclohexan;
- chlorierten Alkenen und vorzugsweise Allylchlorid;
- fluorierten Alkenen und vorzugsweise 4,4,5,5,6,6,7,7,7-Nonafluor-1-Hepten;

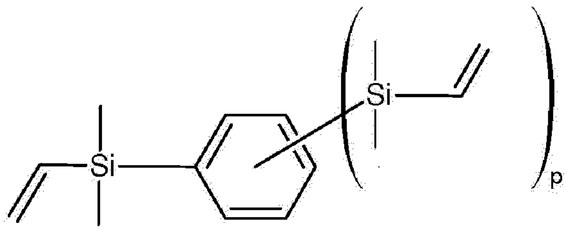,

mit p gleich 1 oder 2;

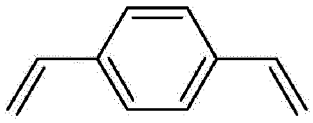;

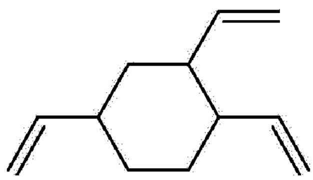;

oder

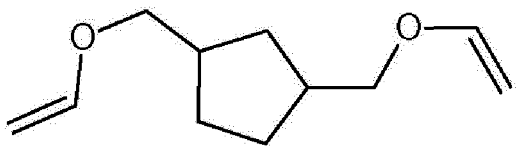

und ihren Mischungen.

**12.** Verfahren nach einem beliebigen der Ansprüche 1 bis 11, bei dem die Verbindung (O) ausgewählt ist aus der Gruppe, die besteht aus:

- Hydrogensilanverbindungen der Formel (III):

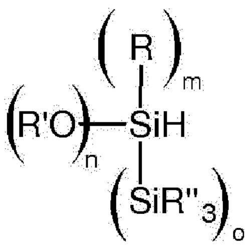

(III),

in der:

- R voneinander unabhängig darstellt: ein Wasserstoffatom; ein Halogenatom, vorzugsweise Chlor; eine Alkylgruppe, gegebenenfalls substituiert durch eine oder mehrere Aryl- oder Cycloalkylgruppen, durch ein oder mehrere Halogenatome und/oder durch eine oder mehrere Ketonfunktionen; eine Cycloalkylgruppe, gegebenenfalls substituiert durch eine oder mehrere Alkylgruppen und/oder durch ein oder mehrere Halogenatome; oder eine Arylgruppe, gegebenenfalls substituiert durch eine oder mehrere Alkylgruppen und/oder durch ein oder mehrere Halogenatome,
- R' voneinander unabhängig darstellt: eine Alkylgruppe, gegebenenfalls substituiert durch eine oder mehrere Aryl- oder Cycloalkylgruppen, durch ein oder mehrere Halogenatome und/oder durch eine Ketonfunktion; eine Cycloalkylgruppe, gegebenenfalls substituiert durch eine oder mehrere Alkylgruppen und/oder durch ein oder mehrere Halogenatome; oder eine Arylgruppe, gegebenenfalls substituiert durch eine oder mehrere Alkylgruppen und/oder durch ein oder mehrere Halogenatome,
- R" voneinander unabhängig darstellt: ein Wasserstoffatom; ein Halogenatom, vorzugsweise Chlor; eine Alkylgruppe, gegebenenfalls substituiert durch eine oder mehrere Aryl- oder Cycloalkylgruppen und/oder durch ein oder mehrere Halogenatome; eine Cycloalkylgruppe, gegebenenfalls substituiert durch eine oder mehrere Alkylgruppen und/oder durch ein oder mehrere Halogenatome; oder eine Arylgruppe, gegebenenfalls substituiert durch eine oder mehrere Alkylgruppen und/oder durch ein oder mehrere Halogenatome und
- m, n und o ganze Zahlen gleich 0, 1, 2 oder 3 sind und m+n+o= 3,

wobei R, R' und R" identisch oder unterschiedlich sind;

- die Polyorganosiloxane umfassen:

(i) mindestens eine Siloxyleinheit der Formel (IV):

$$H_d Z^3_e SiO_{\frac{4-(d+e)}{2}} \quad \text{(IV)},$$

in der:

- d = 1 oder 2, vorzugsweise d = 1
- e = 0, 1 oder 2
- d + e = 1,2 oder 3,
- das/die Symbol(e) $Z^3$, identisch oder unterschiedlich, darstellen: eine monovalente Kohlenwasserstoffgruppe mit 1 bis 30 Kohlenstoffatomen, gegebenenfalls substituiert durch Heteroatome oder Heteroatome enthaltende Radikale und vorzugsweise ausgewählt aus der Gruppe, die durch Alkylgruppen mit 1 bis 8 eingeschlossenen Kohlenstoffatomen und Arylgruppen gebildet wird, und noch bevorzugter ausgewählt aus der Gruppe, die von einem Methyl-, Ethyl-, Propyl-, 3,3,3-Trifluorpropyl-, Xylyl-, Tolyl- und Phenylradikal, vorzugsweise einem Phenyl- oder Methyl-, vorzugsweise Methylradikal, gebildet wird,; und

(ii) gegebenenfalls mindestens eine Siloxyleinheit der Formel (V):

$$Z^2_c SiO_{\frac{4-c}{2}} \quad \text{(V)},$$

in der:

- c = 0, 1, 2 oder 3, vorzugsweise 1, 2 oder 3;
- das/die Symbol(e) $Z^3$, identisch oder unterschiedlich, darstellen: eine monovalente Kohlenwasserstoffgruppe mit 1 bis 30 Kohlenstoffatomen, gegebenenfalls substituiert durch Heteroatome oder Heteroatome enthaltende Radikale und vorzugsweise ausgewählt aus der Gruppe, die gebildet wird durch Alkylgruppen mit 1 bis 8 eingeschlossenen Kohlenstoffatomen und Arylgruppen, und noch bevorzugter ausgewählt aus der Gruppe, die von einem Methyl-, Ethyl-, Propyl-, 3,3,3-Trifluorpropyl-, Xylyl-, Tolyl-

und Phenylradikal, vorzugsweise einem Phenyl- oder Methyl-, vorzugsweise Methylradikal, gebildet wird,

und ihren Mischungen.

**13.** Verfahren nach einem beliebigen der Ansprüche 1 bis 8, bei dem das Molverhältnis $R = \frac{Unsättigungszahl\ der\ Verbindungen\ C}{Zahl\ der\ Gruppen\ SiH\ der\ Verbindungen\ O}$ von 0,01 bis 2 variiert.

**14.** Verfahren nach einem beliebigen der Ansprüche 1 bis 13, bei dem die Menge der metallischen Nanopartikel bezogen auf das Gesamtgewicht der Verbindungen (C) und (O) von 1 bis 50 ppm, vorzugsweise von 5 bis 20 ppm, realisiert wird.

**15.** Verfahren nach einem beliebigen der Ansprüche 1 bis 14, bei dem das Molverhältnis $R = \frac{Unsättigungszahl\ der\ Verbindungen\ C}{Zahl\ der\ Gruppen\ SiH\ der\ Verbindungen\ O}$ von 0,01 bis 0,99 variiert.

**16.** Verfahren zur Hydrosilylierung nach einem der Ansprüche 1 bis 14, folgende Schritte umfassend:

a) Umsetzung der Organosiliziumverbindung (O) mit einer ersten Verbindung (C) nach dem Verfahren (P), wobei R zwischen 0,01 und 0,99 variiert; und
b) Umsetzung der Organosiliziumverbindung, die im Schritt a) erhalten wird, mit einer zweiten Verbindung (C), die unterschiedlich ist von der, die im Schritt a) realisiert wird, nach dem Verfahren (P), wobei das Verhältnis R dieses Schrittes b) hinsichtlich der Realisierung einer zweiten Verbindung (C) von 0,01 bis 1 variiert,

wobei die Schritte a) und b) in Anwesenheit eines katalytischen Systems, wie es in den Ansprüchen 1 bis 14 definiert ist, durchgeführt wird.

**17.** Verfahren nach einem beliebigen der Ansprüche 1 bis 16, **dadurch gekennzeichnet, dass** es kontinuierlich durchgeführt wird.

**18.** Verfahren nach einem beliebigen der Ansprüche 1 bis 17, **dadurch gekennzeichnet, dass** es bei einer Temperatur von 20 bis 100°C durchgeführt wird.

**19.** Verwendung des Materials (A) nach einem der Ansprüche 1 bis 14 als katalytisches System der Hydrosilylierung für Reaktionen zwischen einer Organosiliziumverbindung (O) und einer Verbindung (C), die mindestens eine Ungesättigtheit enthält.

## Claims

**1.** A method (P) for hydrosilylation of at least one compound (C) comprising at least one unsaturation in the presence of an organosilicon compound (O) comprising at least one hydrogen atom directly bound to a silicon atom and of a catalytic hydrosilylation system comprising a structured porous material (A) including pores and an inorganic backbone composed of silicon oxide walls in which are contained metal nanoparticles.

**2.** The method according to claim 1, wherein the material (A) is in the form of a powder.

**3.** The method according to claim 2, wherein the material (A) as a powder is supported on a substrate.

**4.** The method according to one of claims 1 to 3, wherein the metal nanoparticles are platinum nanoparticles.

**5.** The method according to one of claims 1 to 4, for which the material (A) has a double porosity with mesopores having a diameter from 2 to 50 nm and microporous channels, present in the walls of the material (A), having a diameter of less than 2 nm.

**6.** The method according to one of claims 1 to 5, for which the material (A) has a BET specific surface area from 20 to 1,200 $m^2/g$, preferably from 300 to 1,100 $m^2/g$.

**7.** The method according to any of claims 1 to 6, for which the metal nanoparticles have an average diameter from 1 to 10 nm.

**8.** The method according to any of claims 1 to 7 for which the walls of the inorganic backbone of the material (A) have a thickness greater than or equal to 3 nm, preferably a thickness from 5 to 15 nm.

**9.** The method according to any of claims 1 to 8, for which the inorganic backbone of the material (A) has a vermicular, cubic or hexagonal structure, preferably hexagonal in two dimensions.

**10.** The method according to any of claims 1 to 9, for which the compound (C) comprises one or several alkene functions and from 2 to 40 carbon atoms or one or several alkyn functions and from 2 to 40 carbon atoms.

**11.** The method according to any of claims 1 to 10, for which the compound (C) is selected from the group formed by:

- $C_1$ - $C_4$ alkyl acrylates and methacrylates;
- acrylic acid or methacrylic acid;
- acetylene;
- alkenes, preferably octene and more preferentially 1-octene;
- non-conjugate dienes and preferably hexadiene or octadiene;
- allyl alcohol;
- allylamine;
- allyl and glycidyl ether;
- allyl and piperidine ether and preferably sterically hindered allyl and piperidine ether;
- styrene and preferably alpha-methyl-styrene;
- 1,2-epoxy-4-vinylcyclohexane;
- chlorinated alkenes and preferably allyl chloride;
- fluorinated alkenes and preferably 4,4,5,5,6,6,7,7,7-nonafluoro-1-heptene;

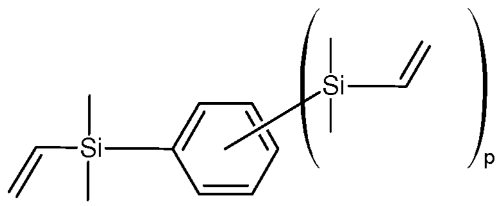
,

with p having the value 1 or 2;

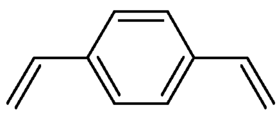
;

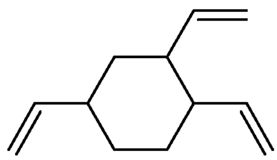
;

or

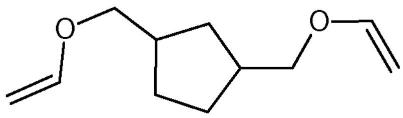

,

and mixtures thereof.

**12.** The method according to any of claims 1 to 11, for which the compound (O) is selected from the group formed by:

- hydrogen silane compounds of formula (III):

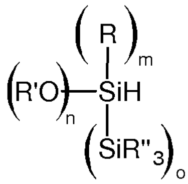

(III)

wherein:

- R represents independent of the others, a hydrogen atom; a halogen atom, preferably chlorine; an alkyl group optionally substituted with one or several aryl or cycloalkyl groups, with one or several halogen atoms and/or with one or several ketone functions; a cycloalkyl group optionally substituted with one or several alkyl groups and/or with one or several halogen atoms; or an aryl group optionally substituted with one or several alkyl groups and/or with one or several halogen atoms;
- R' represents, independently of the others, an alkyl group optionally substituted with one or several aryl or cycloalkyl groups, with one or several halogen atoms and/or with one ketone function; a cycloalkyl group optionally substituted with one or several alkyl groups and/or with one or several halogen atoms; or an aryl group optionally substituted with one or several alkyl groups and/or with one or several halogen atoms;
- R" represents, independently of the others, a hydrogen atom; a halogen atom, preferably chlorine; an alkyl group optionally substituted with one or several aryl or cycloalkyl groups and/or with one or several halogen atoms; a cycloalkyl group optionally substituted with one or several alkyl groups and/or with one or several halogen atoms; or an aryl group optionally substituted with one or several alkyl groups and/or with one or several halogen atoms; and
- m, n and o are integers of value 0, 1, 2 or 3, and m + n + o = 3,

R, R' and R" being either identical or different;

- the polyorganosiloxanes comprising:

(i) at least one siloxyl unit of formula (IV)

$$H_d Z^3{}_e SiO_{\frac{4-(d+e)}{2}} \quad \text{(IV)}$$

wherein:

- d = 1 or 2, preferably d = 1
- e = 0, 1 or 2
- d + e = 1, 2 or 3,
- the symbol(s) $Z^3$, either identical or different, represent a monovalent hydrocarbon group notably having from 1 to 30 carbon atoms optionally substituted with heteroatoms or radicals comprising heteroatoms and preferably selected from the group formed by alkyl groups having from 1 to 8 carbon atoms inclusive and aryl groups, and further more preferentially selected from the group

formed by a methyl, ethyl, propyl, 3,3,3-trifluoropropyl, xylyl, tolyl and phenyl radical, preferably phenyl or methyl, preferably methyl; and

(ii) optionally at least one siloxyl unit of formula (V)

$$Z^2{}_c SiO_{\frac{4-c}{2}} \quad (V)$$

wherein:

- c = 0, 1, 2 or 3, preferably 1, 2 or 3;
- the symbol(s) $Z^2$, either identical or different, represent a monovalent hydrocarbon group having from 1 to 30 carbon atoms optionally substituted with heteroatoms or with radicals comprising heteroatoms and preferably selected from the group formed by alkyl groups having from 1 to 8 carbon atoms inclusive and aryl groups, and still more preferentially selected from the group formed by a methyl, ethyl, propyl, 3,3,3-trifluoropropyl, xylyl, tolyl and phenyl radical, preferably phenyl or methyl, preferably methyl,

and mixtures thereof.

**13.** The method according to any of claims 1 to 12 for which the molar ratio $R=\frac{number\ of\ unsaturations\ of\ the\ C\ compounds}{number\ of\ SiH\ groups\ of\ the\ O\ compounds}$ varies from 0.01 to 2.

**14.** The method according to any of claims 1 to 13, for which the amount of applied metal nanoparticles based on the total weight of the compounds (C) and (O) is from 1 to 50 ppm, preferably from 5 to 20 ppm.

**15.** The method according to any of claims 1 to 14, for which the molar ratio $R=\frac{number\ of\ unsaturations\ of\ the\ C\ compounds}{number\ of\ SiH\ groups\ of\ the\ O\ compounds}$ varies from 0.01 to 0.99.

**16.** The hydrosylilation method according to any of claims 1 to 14 comprising the following steps:

a) reacting the organosilicon compound (O) with a first compound (C), according to the method (P), R varying from 0.01 to 0.99; and
b) reacting the organosilicon compound obtained in step a) with a second compound (C) different from the one applied in step a), according to the method (P), the ratio R of this step b) concerning the application of a second compound (C) varying from 0.01 to 1,

steps a) and b) being carried out in the presence of a catalytic system as defined in claims 1 to 14.

**17.** The method according to any of claims 1 to 16, **characterized in that** it is conducted continuously.

**18.** The method according to any of claims 1 to 17, **characterized in that** it is applied at a temperature from 20 to 100°C.

**19.** The use of the material (A) according to one of claims 1 to 14 as a hydrosilylation catalytic system for reactions between an organosilicon compound (O) and a compound (C) comprising at least one unsaturation.

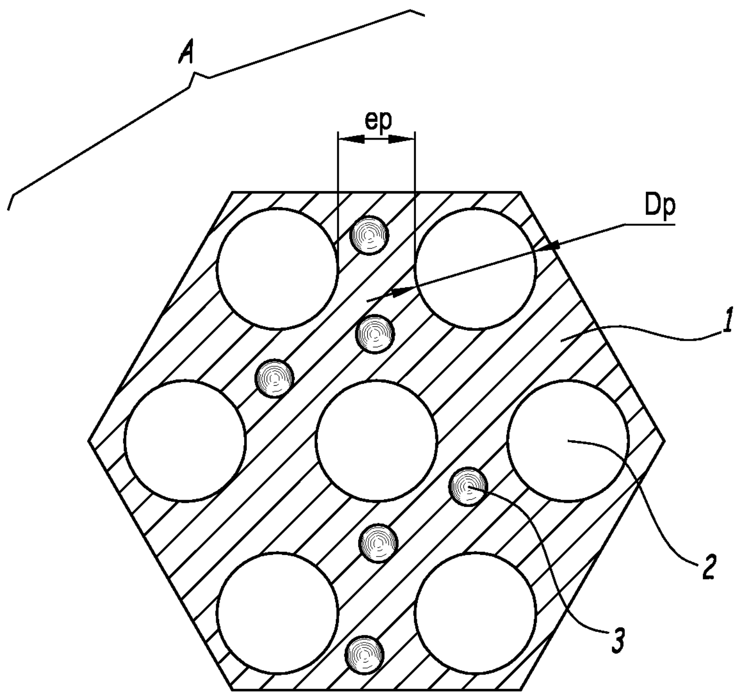


Fig.1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 7038001 B
- WO 2010040926 A


### Littérature non-brevet citée dans la description


- **GLATTER ; KRATKY.** Small Angle X-Rays Scattering. Academic Press, 1982
- **PÉREZ et al.** *Chemical Engineering journal,* 2010, vol. 158, 325-322
- **ZHAO et al.** *Catalysis Today,* 2009, vol. 147, 215-219
- **WEI et al.** *Catalysis Today,* 2009, vol. 147, 66-70
- **BOUALLEG et al.** *Journal of Catalysis,* 2011, vol. 284, 184-193
- **F. FERKOUS.** *Journal of Organometallic Chemistry,* 1991, vol. 420 (3), 315-320
- **P.RIVIERE.** *Journal of Organometallic Chemistry,* 1973, vol. 49, 173-189
- **L.L.HENCH et al.** *Chem.Rev.,* 1990, 33-72
- **S.BIZ et al.** *Catal.Rev.-Sci.Eng,* 1998, vol. 0 (3), 329-407
- **BOUALLEG et al.** *Chem. Mater,* 2009, vol. 21, 775-777